Europäisches Patentamt

European Patent Office

Office européen des brevets

(19)

(11) **EP 1 197 523 A1**

(12) **EUROPEAN PATENT APPLICATION**
published in accordance with Art. 158(3) EPC

(43) Date of publication:
**17.04.2002 Bulletin 2002/16**

(21) Application number: **00906666.3**

(22) Date of filing: **03.03.2000**

(51) Int Cl.⁷: **C08L 33/12**, C08F 20/20,
B29C 43/02, B29B 11/16,
C04B 26/06
// (B29K105/06, 33:00)

(86) International application number:
**PCT/JP00/01274**

(87) International publication number:
**WO 00/52095 (08.09.2000 Gazette 2000/36)**

(84) Designated Contracting States:
**AT BE CH CY DE DK ES FI FR GB GR IE IT LI LU
MC NL PT SE**

(30) Priority: 03.03.1999 JP 5538999
03.03.1999 JP 5538899
21.04.1999 JP 11323699
21.04.1999 JP 11323799
21.04.1999 JP 11323899
27.04.1999 JP 11947199
27.04.1999 JP 11947299
27.04.1999 JP 12041999
27.04.1999 JP 12042099
27.04.1999 JP 12042199

(71) Applicant: **Mitsubishi Rayon Co., Ltd.
Tokyo 108-8506 (JP)**

(72) Inventors:
• **KOYANAGI, Seiya, P.D.L.,
Mitsubishi Rayon Co. Ltd.
Nagoya-shi, Aichi 461-8677 (JP)**
• **KISHIMOTO, Yuichiro, P.D.L.,
Mitsubishi Rayon Co.
Nagoya-shi, Aichi 461-8677 (JP)**

• **HAYASHI, Kentaro, P.D.L.,
Mitsubishi Rayon Co. Ltd
Nagoya-shi, Aichi 461-8677 (JP)**
• **NAKAHARA, Yoshihito, P.D.L.,
Mitsubishi Rayon Co.
Nagoya-shi, Aichi 461-8677 (JP)**
• **SASAKI, Akinobu,
Corporate Research Laboratories
Otake- shi, Hiroshima 739-0693 (JP)**
• **SATOU, Haruki,
Corporate Research Laboratories
Otake-shi, Hiroshima 739-0693 (JP)**
• **YANASE, Akitada, T.P.,
Mitsubishi RayonCo., Ltd.
Toyohashi-shi, Aichi 440-8601 (JP)**
• **KAZEHAYA, Yuuji, T.P.,
Mitsubishi Rayon Co., Ltd.
Toyohashi-shi, Aichi 440-8601 (JP)**

(74) Representative:
**ter Meer, Nicolaus, Dipl.-Chem., Dr. et al
TER MEER STEINMEISTER & PARTNER GbR,
Patentanwälte,
Mauerkircherstrasse 45
81679 München (DE)**

(54) **METHOD FOR PRODUCING ACRYLIC BMC, METHOD FOR PRODUCING ACRYLIC SYRUP,
AND METHOD FOR PRODUCING ACRYLIC MOLDED ARTICLE**

(57)     Disclosed are a method of producing an acrylic BMC wherein kneading and thickening are conducted in one process by kneading and simultaneously thickening an acrylic monomer (A), an acrylic polymer (B), an inorganic filler (C) and a curing agent (D) in a continuous kneader (9) under temperature condition in the range from 30°C to [10 hours half life temperature of the curing agent (D) - 10]°C; a method of producing acrylic syrup wherein mixing of the component (D) and dissolution of the component (B) are conducted in one process by mixing the components (A), (B) and (D) in a continuous kneader (9) under the above-mentioned temperature condition and simultaneously dissolving the component (B); and a method of producing an acrylic molded article, wherein the above-described acrylic BMC or acrylic syrup produced is cured under heat and pressure.

EP 1 197 523 A1

F I G. 1

**Description**

TECHNICAL FIELD

The present invention relates to a method of producing an acrylic BMC (bulk molding compound) or acrylic syrup showing high productivity and excellent in handling property, molding processability and storage stability, and a method of producing an acrylic molded article using an acrylic BMC or acrylic syrup.

BACKGROUND ART

Acrylic syrup composed of an acrylic monomer and acrylic polymer mainly composed of methyl methacrylate is conventionally widely used as a material of illumination instruments, sign boards, automobile parts, construction matters, artificial marble and other various molded articles, because of excellent transparency, weather resistance and the like.

For example, acrylic artificial marble can be produced by compounding an inorganic filler such as aluminum hydroxide and the like into acrylic syrup and curing the compound. This acrylic artificial marble is widely used in counters such as a kitchen counter and the like, washing and dressing stands, water-proof pans, bathtubs, wall materials, and other construction uses.

As a method of producing this acrylic syrup, for example, JP-A No. 10-158332 discloses a production method using a continuous twin-screw kneader.

Regarding a method of producing acrylic artificial marble, general is a casting method in which a so-called premix obtained by dispersing an inorganic filler in acrylic syrup is filled in a mold, and this is cured by polymerization at relatively lower temperature. However, this method has a problem that longer time is required for molding, leading to low productivity.

For improving this defect, investigations have been conventionally made for producing acrylic artificial marble by curing under heat and pressure an acrylic BMC obtained by thickening an acrylic premix with a thickening agent.

For example, JP-B No. 5-13899 discloses a method in which an acrylic resin powder having specific average molecular weight, a curing agent and inorganic filler are added to an acrylic monomer containing a crosslinking agent in specific amount, and the mixture is kneaded and aged while heating at temperature lower than curing temperature.

Further, JP-A Nos. 10-218915 and 10-292015 disclose a method in which an acrylic monomer, an acrylic polymer and inorganic filler are previously kneaded in a twin-screw kneader at a temperature of 65°C or more, to once obtain a clay-like substance (dough), then, a curing agent is mixed, after cooling or during a cooling process, with this clay-like substance, to produce an acrylic BMC.

In JP-A No. 10-67906, the present inventors disclose a method of continuously producing an acrylic BMC using a continuous kneader. A method of charging acrylic syrup, inorganic filler and polymer powder into a continuous kneader and effecting mixing, thickening and extrusion shaping in one process as disclosed herein has been found already by the instant inventors.

However, in the method of producing acrylic syrup described in JP-A No. 10-158332, since dissolution is effected under temperatures of 80°C or more or shortening the dissolution time of an acrylic polymer, a curing agent can not be mixed simultaneously. Therefore, it is necessary that acrylic syrup is once produced at high temperatures, then, this syrup is cooled before addition of a curing agent. Namely, production of acrylic syrup containing a curing agent requires three processes, a dissolution process, cooling process and curing agent mixing process, leading to poor production efficiency, complicated production line and difficulty in increasing productivity.

In the method of producing an acrylic BMC disclosed in JP-B No. 5-13899, since kneading is effected for dissolving and thickening an acrylic resin powder, over 30 minutes or more at a temperature of 60°C though it is lower than the curing temperature, therefore, the total calorie received by the acrylic BMC is large and the storage stability of the resulting acrylic BMC deteriorates. Further, when a colored resin particle is going to be compounded under this condition to obtain a grain-like acrylic BMC, the colored resin particle is dissolved during kneading, and the grain pattern becomes extremely blur or the grain pattern disappears, giving deteriorated appearance.

In the method described in JP-A Nos. 10-218915 and 10-292015, since an acrylic polymer is dissolved by heating at temperatures of 65°C or more in a thickening process for obtaining an acrylic BMC, it is difficult to mix a curing agent in this process, requiring a cooling process. As a result, three processes, a thickening process, cooling process and curing agent mixing process, and when procedure is progressed to shaping, 4 to 5 processes are necessary in total, leading to a complicated production line and difficulty in increasing productivity. Further, in the method disclosed in this publication, since a clay-like substance is once produced in a thickening process before mixing of a curing agent to produce an acrylic BMC, uniform dispersibility of the curing agent in the acrylic BMC is poor, and partial curing failure may occur.

In the method disclosed in JP-A No. 10-67906, an acrylic BMC is produced at production speeds from 20 to 25 kg/h and the production efficiency of a continuous kneader (a value obtained by dividing the production speed of a BMC by the square of the axis diameter of the continuous kneader) is as low as 0.0045 kg/h · mm$^2$. Since this publication does not describe specific conditions (temperature, pressure and the like) for kneading, it is not easy to produce an acrylic BMC at higher production speed (30 kg/h or more) or at high production efficiency (0.01 kg/h · mm$^2$ or more). For example, when the feeding speed of a raw material is simply increased for enhancing the production speed of an acrylic BMC, a continuous kneader is filled with the raw material excessively and excess pressure is applied to the kneader, consequently, the acrylic BMC is not discharged from the continuous kneader and the raw material remains in the continuous kneader and is cured in the kneader, and the raw material overflow from a feeding port or the feeding port is clogged with the raw material, in some cases. Then, if the residence time of a raw material in the continuous kneader is simply shortened for preventing excess filling of the continuous kneader with a raw material, thickening may be insufficient in some cases. Further, if the kneading temperature is simply raised for increasing the thickening speed, an acrylic BMC may be polymerized and cured in the continuous kneader.

Further, though JP-A Nos. 10-218905, 10-292015 and 10-67906 describe methods of continuously feeding a raw material to a continuous kneader, there is no specific description on the feeding precision. In continuous production of an acrylic BMC, the feeding precision of a raw material is important, and particularly when the raw material is a powder, the raw material feeding precision may deteriorate in some cases depending on the properties and conditions of the powder and the feeding method and feeding speed thereof. Therefore, when the continuous production described in these publications is continued for a longer period of time, parts in which the weight ratio of constituent components of the resulting acrylic BMC is not constant are formed locally, and if this acrylic BMC is cured, acrylic artificial marble showing color shade and pattern shade may be obtained in some cases.

Further, in the thickening methods described in JP-B No. 5-13899, JP-A Nos. 10-218915, 10-292015 and 10-67906. manifest a tendency that the thickening speed is easily influenced by temperature since the viscosity is increased by dissolving a polymer powder into an acrylic monomer. Therefore, even if the kneading temperature is made constant, an influence by the temperature of a raw material is exerted easily, and there occurs a tendency that the qualities (dispersed condition of constituent components, and the like) and physical properties (viscosity and the like) of the resulting acrylic BMC easily vary depending on time range and season for production, namely, the temperature of outside air.

Furthermore, in the method described in JP-A No. 1.0-67906, since a kneading process, thickening process and shaping process are continuously conducted in one apparatus when a shaped acrylic BMC is produced, temperature conditions suitable for the kneading process and temperature conditions suitable for the shaping process may differ depending on raw material components used. For example, if the temperature for producing an acrylic BMC is adjusted to temperature conditions suitable for the kneading process, the width of working conditions in shaping is restricted, and the selection range of dice forms may be limited in some cases, and reversely, if the temperature for producing an acrylic BMC is adjusted to temperature conditions suitable for the shaping process, color shade and pattern shade of a molded article ascribed to poor kneading may occur in some cases.

DISCLOSURE OF INVENTION

The present invention has been made for solving these problems of conventional technologies, and accomplished for further improving the production conditions and production process of acrylic syrup or acrylic BMC, by utilizing the above-mentioned production method (JP-A No. 10-67906) found by the present inventors.

Namely, an object of the present invention is to provide a production method which is useful for producing acrylic artificial marble having no color shade and pattern shade, manifesting a clear grain pattern and having excellent appearance and which is used for producing an acrylic BMC showing stabilized qualities such as dispersed conditions of constituent components and the like and stabilized physical properties such as viscosity and the like, another object thereof is to provide a production method which can effect stable production over a long period of time by a simple production line and which gives high production speed and production efficiency, another object thereof is to provide a production method showing a wider working condition width, which can conduct continuous shaping using any dice form irrespective of constituent components of an acrylic BMC, still another object thereof is to provide a method of producing acrylic syrup useful as a raw material of an acrylic BMC, and, a further object thereof is to provide an acrylic molded article, such as acrylic artificial marble and the like, having no color shade and pattern shade, manifesting a clear grain pattern and showing excellent appearance.

The present inventors have intensively studied for attaining the above-mentioned object, and resultantly, found that an acrylic BMC having stabilized qualities and physical properties can be stably produced over a long period of time at high production efficiency, by controlling the tip pressure, kneading torque, consumption energy, production efficiency, specific rotation speed and raw material feeding precision of a continuous kneader in production of an acrylic BMC, that kneading of a curing agent and thickening of a BMC can be conducted by one process in a continuous kneader to simplify the production line, by effecting kneading under specific temperature conditions depending on the decomposition temperature of a curing agent used, and by this method, an acrylic BMC having excellent storage stability, excellent in curing property, showing no color shade and pattern shade, and manifesting a clear grain pattern can be produced at high production efficiency, that an acrylic BMC having stabilized qualities and physical properties can be produced without influenced by environments such as season and the like, by controlling the raw material temperature, and that an acrylic BMC having any composition can be produced in wider working condition width irrespective of constituent components of the acrylic BMC, by effecting a kneading process and a shaping process as separate processes, leading to completion of the present invention.

Namely, the present invention relates to:

a method of producing an acrylic BMC comprising an acrylic monomer (A), an acrylic polymer (B) and an inorganic filler (C), and if desired, a curing agent (D) and/or an inorganic filler-containing resin particle (E), as constituent components, wherein

the components (A) to (C) are kneaded in a continuous kneader and the continuous kneader is operated under such conditions that the tip pressure of the continuous kneader is from 300 to 1500 kPa;

a method of producing an acrylic BMC, wherein the components (A) to (C) are kneaded in a continuous kneader under such temperature and time conditions that when the components (A) to (C) are kneaded in a torque rheometer, a kneading torque of $1N \cdot m$ or more is detected by the apparatus;

a method of producing an acrylic BMC, wherein the components (A) to (C) are kneaded in a continuous kneader under such conditions that the consumption energy required for kneading the components (A) to (C) is 1 $MJ/m^3$ or more per unit volume of the acrylic BMC;

a method of producing an acrylic BMC, wherein the components (A) to (C) are kneaded in a continuous kneader under such conditions that the production efficiency of the continuous kneader is 0.01 $kg/h \cdot mm^2$ or more;

a method of producing an acrylic BMC, wherein the components (A) to (C) are kneaded in a continuous kneader under such conditions that the specific rotation speed of the continuous kneader is in the range from 0.5 to 1.5 $rpm \cdot h/kg$;

a method of producing an acrylic BMC, wherein, in kneading the components (A) to (C) in a continuous kneader, powder components among the components (A) to (C) are fed into the continuous kneader, in a proportion in the range of $\pm 7$ wt% based on the given feeding amount in 5 seconds;

a method of producing an acrylic BMC, wherein kneading and thickening are conducted in one process, by kneading and simultaneously thickening the components (A) to (D) in a continuous kneader under temperature conditions in the range from 30°C to [10 hours half life temperature of the curing agent (D) - 10]°C;

a method of producing an acrylic BMC, wherein at least one of the components (A) to (D) is fed to a kneader while controlling the temperature thereof; and

a method of producing an acrylic BMC comprising a first process of kneading the components (A) to (C) under temperature conditions of 60°C or lower, and a second process of continuously shaping the kneaded substance.

Further, the present invention relates to a method of producing acrylic syrup comprising an acrylic monomer (A), and acrylic polymer (B), and a curing agent (D), wherein mixing of the component (D) and dissolution of the component (B) are conducted in one process, by mixing the component (A), component (B) and component (D) and simultaneously dissolving the component (B) in a continuous kneader under temperature conditions in the range from 30 °C to [10 hours half life temperature of the curing agent (D) - 10]°C.

Still further, the present invention relates to a method of producing an acrylic molded article, wherein the above-mentioned acrylic BMC or acrylic syrup is cured under heat and pressure.

Furthermore, the present invention relates to an acrylic molded article obtained by curing under heat and pressure an acrylic BMC obtained by a continuous production method, wherein the maximum value ($\Delta E^*MAX$) of the chrominance ($\Delta E^*$) between color measuring points obtained from color measured values ($L^*$, $a^*$, $b^*$) measured at any three ore more positions of the molded article is not more than 3.

BRIEF DESCRIPTION OF DRAWINGS

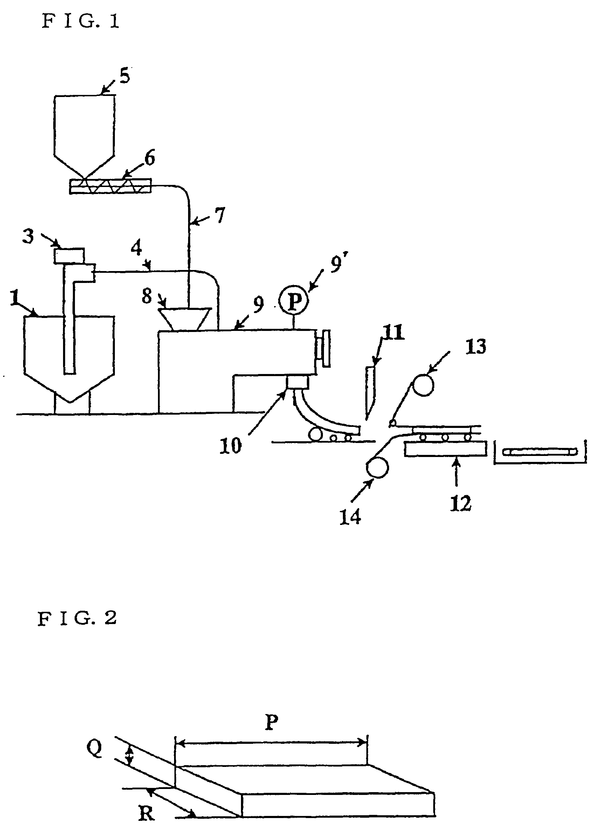

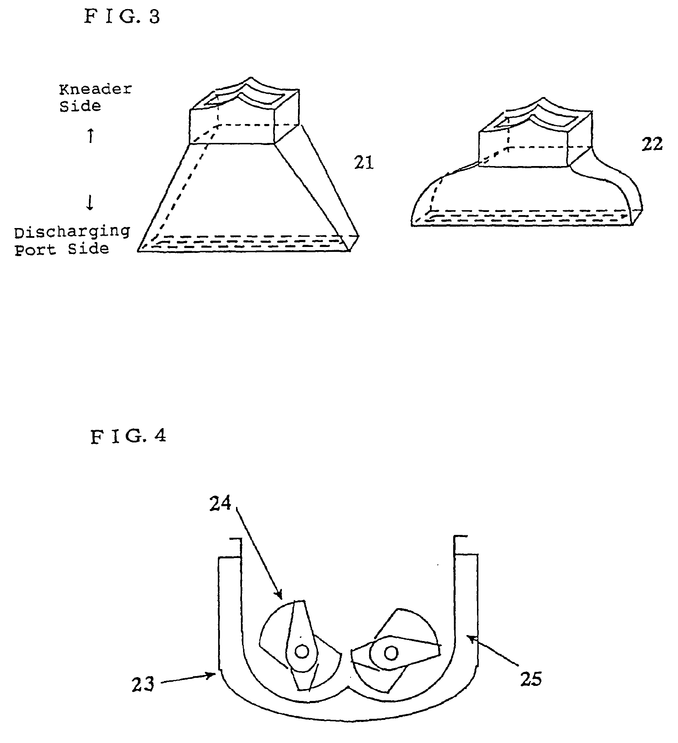

Fig. 1 is a schematic view showing a continuous twin-screw kneader used in the present invention. Fig. 2 is a schematic view showing one example of an acrylic BMC shaped in the form of sheet. Fig. 3 is a view showing an example of a die used in the present invention. Fig. 4 is a view showing an example of a production facility for an acrylic BMC using a batch-wise twin-screw kneader.

BEST MODE FOR CARRYING OUT THE INVENTION

The acrylic monomer (A) used in the present invention is a component which imparts suitable flowability in molding the acrylic BMC of the present invention.

The content of the component (A) is not particularly restricted, and preferably in the range from 5 to 95 wt% based on the whole amount of an acrylic BMC of the present invention. When this content is 5 wt% or more, there is a tendency that the flowability of an acrylic BMC in molding becomes excellent, and when 95 wt% or less, there is a tendency that the shrinkage ratio in curing lowers. The lower limit of this content is more preferably 10 wt% or more, particularly preferably 15 wt% or more. The upper limit of this content is more preferably 50 wt% or less, particularly preferably 40 wt% or less.

The acrylic monomer used in the component (A) is a monomer having a methacryloyl and/or acryloyl group or a mixture thereof, and is not particularly restricted. Examples thereof include methyl (meth)acrylate, alkyl (meth) acrylates carrying an alkyl group having 2 to 20 carbon atoms, hydroxyalkyl (meth)acrylates carrying a hydroxyalkyl group having 1 to 20 carbon atoms, (meth)acrylates carrying an ester group having an aromatic ring such as benzyl (meth)acrylate and the like, (meth)acrylates carrying an ester group having a cyclohexane ring such as cyclohexyl (meth)acrylate and the like, (meth)acrylates carrying an ester group having a bicyclo ring such as isobornyl (meth) acrylate and the like, (meth)acrylates carrying an ester group having a tricyclo ring such as tricyclo $[5 \cdot 2 \cdot 1 \cdot 0^{2.6}]$ decanyl (meth)acrylate and the like, (meth)acrylates carrying an ester group having a fluorine atom such as 2,2,2-trifluoroethyl (meth)acrylate and the like, (meth)acrylates carrying an ester group having a cyclic ether structure such as tetrahydrofurfuryl (meth)acrylate and the like, acrylic monofunctional monomers such as (meth) acrylic acid, metal (meth) acrylates, (meth)acrylic amides and the like; and ethylene glycol di(meth)acrylate, polyethylene glycol di(meth)acrylate, propylene glycol di(meth)acrylate, polypropylene glycol di(meth)acrylate, 1,3-butylene glycol di(meth)acrylate, 1,4-butylene glycol di(meth)acrylate, polybutylene glycol di(meth)acrylate, neopentyl glycol di(meth)acrylate, 1,6-hexanediol di (meth)acrylate, 1,9-nonanediol di(meth)acrylate, 1,10-decanediol di(meth)acrylate, dimethylolethane di (meth) acrylate, 1,1-dimethylolpropane di(meth)acrylate, 2,2-dimethylolpropane di(meth)acrylate, trimethylolethane tri (meth)acrylate, trimethylolpropane tri(meth)acrylate, trimethylolmethane tri(meth)acrylate, tetramethylolmethane tri (meth)acrylate, and polyvalent esters of (meth)acrylic acid with poly-hydric alcohols [for example, pentaerythritol, dipentaerythritol and the like], acrylic polyfunctional monomers such as allyl (meth)acrylate and the like; and other monomers. These may be used alone or in combination of two or more, if necessary. In the instant specification, "(meth)acrylate" means "acrylate and/or methacrylate" .

Particularly, when methyl methacrylate is contained in the component (A), there is a tendency that deep feeling specific to marble can be imparted to the resulting molded article, leading to excellent appearance, preferably. The content of methyl methacrylate is not particularly restricted, and preferably in the range from 1 to 40 wt% based on the whole amount of an acrylic BMC. The lower limit of this content is more preferably 5 wt% or more, the upper limit thereof is more preferably 30 wt% or less.

In addition to an acrylic monomer, the component (A) may also contain a monomer such as aromatic vinyls like styrene, divinylbenzene and the like, and vinyl acetate, (meth)acrylonitrile, vinyl chloride, maleic anhydride, maleic acid, maleates, fumaric acid, fumarates, triaryl isocyanurate, and the like.

For imparting physical properties such as heat resistance, hot water resistance, strength, solvent resistance, dimension stability and the like to a molded article obtained by molding an acrylic BMC of the present invention, a polyfunctional monomer is preferably contained in the component (A). In this case, the content of the polyfunctional monomer is not particularly restricted, and preferably in the range from 1 to 30 wt% based on the whole amount of an acrylic BMC, for obtaining the above-mentioned effect more effectively. The lower limit of this content is more preferably 3 wt% or more, and the upper limit thereof is preferably 25 wt% or less.

Particularly, at least one of neopentyl glycol di (meth)acrylate, 1,3-butylene glycol di(meth)acrylate and tripropylene glycol di(meth)acrylate is preferably used as the polyfunctional monomer since a molded article extremely excellent in surface gloss and hot water resistance is obtained. In this case, at least one of neopentyl glycol di(meth) acrylate, 1,3-butylene glycol di(meth) acrylate and tripropylene glycol di(meth)acrylate and other polyfunctional monomer may also be used together.

The acrylic polymer (B) used in the present invention is a thickening component for thickening an acrylic BMC to a dough (in the form of bulk) having excellent handling property without stickiness, and acts as a thickening agent by, after absorbing an acrylic monomer (A), dissolution of at least part of the acrylic polymer (B) to increase the viscosity of the whole system.

As the constituent components of the acrylic polymer (B) (monomers used in polymerization, and the like), there can be used the above-mentioned monofunctional monomers and/or polyfunctional monomers as listed for the acrylic monomer (A), and a homopolymer obtained by polymerizing a monomer alone or a copolymer obtained by polymerizing two or more monomers together may be used depending on necessity.

The form of the acrylic polymer (B) is not particularly restricted, and preferably a polymer powder. When the acrylic polymer (B) is a polymer powder, handling property thereof tends to be excellent, further, there occurs a tendency that the dissolution speed into an acrylic monomer (A) increases to increase the thickening speed, and thickening in a short time becomes possible to give a tendency that the productivity of an acrylic BMC increases.

Further, the specific surface area of a polymer powder is not particularly restricted, and preferably 0.5 m$^2$/g or more. When the specific surface area of a polymer powder is 0.5 m$^2$/g or more, the dissolution speed into an acrylic monomer (A) increases to give a tendency that the thickening speed increases, and thickening in a short time becomes possible to give a tendency that the productivity of an acrylic BMC increases. The lower limit of this specific surface area is more preferably 1 m$^2$/g or more. The upper limit of this specific surface area is not particularly restricted, and preferably 100 m$^2$/g or less. When the specific surface area is 100 m$^2$/g or less, dispersibility of a polymer powder against an acrylic monomer (A) tends to be excellent, and the kneading property of an acrylic BMC tends to be excellent. The upper limit of this specific surface area is more preferably 80 m$^2$/g or less. If necessary, a polymer powder having a specific surface area of 0.5 m$^2$/g of more and a polymer powder having a specific surface area of less than 0.5 m$^2$/g may be used together.

The average particle size of a polymer powder is not particularly restricted, and preferably in the range from 1 to 500 μm. When this average particle size is 1 μm or more, a polymer powder is not splashed easily, leading to a tendency that the handling property of a polymer powder is improved, and when 500 μm or less, there is a tendency that the appearances of the resulting molded article, particularly, gloss and surface smoothness become excellent. The lower limit of this average particle size is more preferably 5 μm or more, particularly preferably 10 μm or more. The upper limit thereof is more preferably 350 μm or less, particularly preferably 250 μm or less.

A polymer powder is preferably a secondary agglomerate formed by mutual agglomeration of primary particles. When a polymer powder has a form a secondary agglomerate, the speed of absorbing an acrylic monomer (A) increases to give a tendency of increased thickening speed.

In this case, the average particle size of primary particles of a polymer powder is preferably in the range from 0.03 to 1 μm. When the average particle size of primary particles is in the range from 0.03 to 1 μm, the speed of absorbing an acrylic monomer (A) increases to give a tendency of increased thickening speed, and thickening in a short time becomes possible to give a tendency of improved productivity of an acrylic BMC. The lower limit of this primary particle size is more preferably 0.07 μm or more. The upper limit thereof is more preferably 0.7 μm or less.

The bulk density of a polymer particle is not particularly restricted, and preferably in the range from 0.1 to 0.7 g/ml. When this bulk density is 0.1 g/ml or more, a polymer powder is not splashed easily, leading to a tendency that the handling property of a polymer powder is improved. When 0.7 g/ml or less, the speed of absorbing an acrylic monomer (A) increases to give a tendency of increased thickening speed, and thickening in a short time becomes possible to give a tendency of improved productivity of an acrylic BMC. The lower limit of the bulk density is more preferably 0.15 g/ml or more, particularly preferably 0.2 g/ml or more. The upper limit thereof is more preferably 0.65 g/ml or less, particularly preferably 0.6 g/ml or less.

The oil absorption of a polymer powder for linseed oil is not particularly restricted, and preferably in the range from 60 to 200 ml/100g. When this oil absorption is 60 ml/100g or more, the speed of absorbing an acrylic monomer (A) increases to give a tendency of increased thickening speed, and thickening in a short time becomes possible to give a tendency of improved productivity of an acrylic BMC. When this oil absorption is 200 ml/100g or less, dispersibility of a polymer powder against an acrylic monomer (A) tends to be excellent, and the kneading property of an acrylic BMC tends to be excellent. Further, in this case, when an acrylic BMC containing this polymer powder is used for production of granite-like artificial marble, the clearness of a grain pattern tends to be improved. The reason for this is that, since this polymer powder absorbs an acrylic monomer (A) in large amount, swelling of an inorganic filler-containing resin particle which is a material of a grain pattern, with an acrylic monomer (A) is restricted. The lower limit of this oil absorption is more preferably 70 ml/100 g or more, particularly preferably 80 ml/100 g or more. The upper limit thereof is more preferably 180 ml/100 g or less, particularly preferably 160 ml/100 g or less.

The degree of swelling of a polymer powder for methyl methacrylate is not particularly restricted, and preferably 1-fold or less or 20-fold or more. When this degree of swelling is 1-fold or less or 20-fold or more, the dissolution speed into an acrylic monomer (A) increases, leading to a tendency of increased thickening speed, and thickening in a short time becomes possible to give a tendency of improved productivity of an acrylic BMC.

The degree of swelling herein referred to is obtained as follows: A polymer powder is placed into a 100 ml measuring cylinder, compacted to 5 ml by slightly tapping several times, then, methyl methacrylate cooled to 10°C or lower is charged so as to give a total amount of 100 ml, they are stirred quickly so that the mixture becomes uniform totally, then, the measuring cylinder is kept in a constant temperature chamber at 25°C for 1 hour, the volume of the polymer layer (polymer containing methyl methacrylate) at this time is measured, and the ratio of this volume to the original volume (5 ml) of the polymer powder is calculated as the degree of swelling.

Therefore, a polymer powder is only swelled under this condition, the volume of the polymer layer (polymer powder containing methyl methacrylate) after kept under this condition is larger than 5 ml, and the degree of swelling reveals a finite value of larger than 1.

When a polymer powder is dissolved completely under this condition, the whole body of 100 ml after kept under this condition can be regarded as a polymer layer containing methyl methacrylate, and since this polymer layer containing methyl methacrylate depends on the volume of a measuring cylinder used, the degree of swelling is defined as 20-fold or more in this case.

When part of this polymer powder is dissolved and part of this polymer powder remains undissolved under this condition, the volume of the polymer layer undissolved (polymer layer containing methyl methacrylate) is regarded as the volume after swelling. Therefore, the degree of swelling reveals a value of 1 or less in this case.

Further, this polymer particle may be a non-cross-linked polymer powder or a cross-linked polymer powder, and is preferably a non-crosslinked polymer powder. When the polymer powder is a non-crosslinked polymer powder, the thickening speed tends to increase, and thickening in a short time becomes possible to give a tendency of improved productivity of an acrylic BMC. The non-cross-linked polymer powder herein referred to means a polymer powder at least a surface layer part of which is constituted of a non-crosslinked polymer.

As the polymer powder, there can be used a polymer powder having a so-called core/shell structure, constituted of a core phase and a shell phase having mutually different chemical compositions, structures and molecular weights, and the like, of polymers forming them. In this case, the core phase may be a non-crosslinked polymer or a cross-linked polymer, while the shell phase is preferably a non-crosslinked polymer.

The content of the acrylic polymer (B) is not particularly restricted, and preferably in the range from 0.1 to 30 wt% based on the whole amount of an acrylic BMC. When this content is 0.1 wt% or more, a high thickening effect tends to be obtained, and when 30 wt% or less, a tendency occurs that kneading property in producing an acrylic BMC becomes excellent. The lower limit of this content is more preferably 1 wt% or more, particularly preferably 3 wt% or more. The upper limit thereof is more preferably 25 wt% or less, particularly preferably 20 wt% or less.

The weight-average molecular weight of an acrylic polymer (B) is not particularly restricted, and there is a tendency that when the weigh-average molecular weight is higher, the thickening effect is higher and the hot water resistance of a molded article is more excellent, consequently, it is preferably 100000 or more. The upper limit of the weight-average molecular weight is also not particularly restricted, and preferably 500000 or less from the standpoint of the kneading property of an acrylic BMC. The lower limit of this weight-average molecular weight is more preferably 300000 or more, particularly preferably 500000 or more. The upper limit thereof is more preferably 4500000 or less, particularly preferably 4000000 or less.

The weight-average molecular weight herein referred to is a value in terms of polystyrene according to a GPC method, and measured under conditions adopted in examples described below, depending on the range of the weight-average molecular weight.

As the acrylic polymer (B), two or more acrylic polymers at least one of compositions, molecular weights and particle sizes of which differ may also be used together.

The method of producing an acrylic polymer (B) is not particularly restricted, and an acrylic polymer (B) can be produced by any polymerization method such as bulk polymerization, solution polymerization, suspension polymerization, emulsion polymerization, dispersion polymerization and the like. Of them, a method in which an emulsion obtained by emulsion polymerization is subjected to treatments such as spray drying, acid/salt coagulation, freeze drying and the like to obtain a polymer powder is preferable since a polymer powder having the above-mentioned particular specific surface area, bulk density and oil absorption amount can be produced efficiently.

The inorganic filler (C) used in the present invention is a component which imparts granite-like deep texture and heat resistance to a molded article obtained by molding an acrylic BMC.

The content of the inorganic filler (C) is not particularly restricted, and preferably in the range from 5 to 95 wt% based on the whole amount of an acrylic BMC. When the content of the component (C) is 5 wt% or more, the texture and heat resistance of the resulting molded article tend to be excellent, and the shrinkage ratio in curing tends to lower. On the other hand, when this content is 95 wt% or less, the flowability in molding an acrylic BMC tends to be excellent. The lower limit of this content is more preferably 20 wt% or more, particularly preferably 30 wt% or more. The upper limit thereof is preferably 80 wt% or less, particularly preferably 70 wt% or less.

The inorganic filler (C) is not particularly restricted, and examples thereof include aluminum hydroxide, silica, fused silica, calcium carbonate, barium sulfate, titanium oxide, calcium phosphate, talk, mica, clay, glass powder and the like. These inorganic fillers may be subjected to surface treatments such as a silane treatment and the like. These may be appropriately selected and may also be used in combination of two or more, depending on necessity. Among them, aluminum hydroxide, calcium carbonate, silica, fused silica and glass powder are preferable, from the standpoint of the texture of the resulting molded article.

The acrylic BMC in the present invention contains the above-mentioned components (A) to (C) as basic constituent components, and further, (D) a curing agent may also be contained, if necessary.

The content of the curing agent (D) is not particularly restricted, and preferably in the range from 0.01 to 10 wt% based on the whole amount of an acrylic BMC. When this content is 0.01 wt% or more, the curing property of an acrylic BMC tends to be sufficient, and when 10 wt% or less, the storage stability of an acrylic BMC tends to be excellent. The lower limit of this content is more preferably 0.05 wt% or more, particularly preferably 0.1 wt% or more. The upper limit thereof is preferably 5 wt% or less, particularly preferably 2 wt% or less.

The curing agent (D) is not particularly restricted, and there can be used curing agents such as organic peroxides such as bis(4-t-butylcyclohexyl) peroxy dicarbonate (manufactured by Kayaku Akuzo K.K., trade name " Perkadox 16" , 10 hours half life temperature = 44°C), t-hexy peroxy pivalate (manufactured by NOF Corp., trade name "Perhexyl PV" , 10 hours half life temperature = 53 °C), 3,5,5-trimethylhexanoyl peroxide (manufactured by NOF Corp., trade name "Perloyl 355" , 10 hours half life temperature = 59°C), lauroyl peroxide (manufactured by NOF Corp., trade name "Perloyl L" , 10 hours half life temperature = 62°C), t-hexyl peroxy-2-ethyl hexanoate (manufactured by NOF Corp., trade name "Perhexyl O", 10 hours half life temperature = 70°C), t-butyl peroxy-2-ethyl hexanoate (manufactured by NOF Corp., trade name " Perbutyl O", 10 hours half life temperature = 72°C), benzoyl peroxide (manufactured by Kayaku Akuzo K.K., trade name "Kadox B-CH50", 10 hours half life temperature = 72°C), di-t-butyl peroxy-2-methylcyclohexane (manufactured by NOF Corp., trade name "Perhexa MC" , 10 hours half life temperature = 83°C), 1,1-bis(t-hexyl peroxy)-3,3,5-trimethylcyclohexane (manufactured by NOF Corp., trade name "Perhexa TMH" , 10 hours half life temperature = 87°C), 1,1-bis(t-hexyl peroxy)cyclohexane (manufactured by NOF Corp., trade name "Perhexa HC" , 10 hours half life temperature = 87°C), 1,1-bis(t-butyl peroxy)-3,3,5-trimethylcyclohexane (manufactured by NOF Corp., trade name "Perhexa 3M" , 10 hours half life temperature = 90°C), 1,1-bis(t-butyl peroxy)cyclohexane (manufactured by NOF Corp., trade name "Perhexa C" , 10 hours half life temperature = 91°C), 1,1-bis(t-butyl peroxy)cyclododecane (manufactured by NOF Corp., trade name "Perhexa CD", 10 hours half life temperature = 95°C), t-hexyl peroxyisopropyl carbonate (1.0 hours half life temperature = 95°C), t-amyl peroxy-3,5,5-trimethyl hexanoate (manufactured by Kayaku Akuzo K.K., trade name "Kaya Ester AN" , 10 hours half life temperature = 95°C), 1,6-bis(t-butyl peroxycarbonyoxy) hexane (manufactured by Kayaku Akuzo K.K., trade name "Kayarene 6-70" , 10 hours half life temperature = 97°C), t-butyl peroxy laurate (manufactured by NOF Corp., trade name "Perbutyl L" , 10 hours half life temperature = 98°C), t-butyl peroxyisopropyl carbonate (manufactured by NOF Corp., trade name "Perbutyl I" , 10 hours half life temperature = 99°C), t-butyl peroxy-2-ethylhexyl carbonate (manufactured by NOF Corp., trade name "Perbutyl E" , 10 hours half life temperature = 99°C), t-hexyl peroxy benzoate (manufactured by NOF Corp., trade name "Perbutyl Z" , 10 hours half life temperature = 99°C), t-butyl peroxy-3,5,5-trimethyl hexanoate (manufactured by Kayaku Akuzo K.K., trade name "Trigonox 42" , 10 hours half life temperature = 100°C), t-amyl peroxy benzoate (manufactured by Kayaku Akuzo K.K., trade name "KD-1", 10 hours half life temperature = 100 °C), 2,2-bis(t-butyl peroxy)butane (manufactured by NOF Corp., trade name "Perhexa 22", 10 hours half life temperature = 103°C), t-butyl peroxy benzoate (manufactured by NOF Corp., trade name "Perbutyl z", 10 hours half life temperature = 104°C), n-butyl-4,4-bis(t-butyl peroxy) pivalate (manufactured by NOF Corp., trade name " Perhexa V" , 10 hours half life temperature = 105°C), dicumyl peroxide (manufactured by NOF Corp., trade name " Percumyl D" , 10 hours half life temperature = 116°C), 1,3-bis(t-butyl peroxyisopropyl) benzoate (manufactured by Kayaku Akuzo K.K., trade name "Perkadox 14", 10 hours half life temperature = 121°C), and the like; azo compounds such as 2,2'-azobis-2,4-dimethylvaleronitrile (manufactured by Otsuka Kagaku K.K., trade name "ADVN", 10 hours half life temperature = 52°C), 1,1'-azobis-(1-acetoxy-1-phenylethane) (manufactured by Otsuka Kagaku K.K., trade name "OTAZO-15", 10 hours half life temperature = 61°C), 2,2'-azobisisobutyronitrile (manufactured by Otsuka Kagaku K.K., trade name "AIBN" , 10 hours half life temperature = 65°C), 2,2'-azobis-2-methylbutyronitrile (manufactured by Otsuka Kagaku K.K., trade name "AMBN", 10 hours half life temperature = 67°C ), dimethyl-2,2'-isobutylate (manufactured by Otsuka Kagaku K.K., trade name "MAIB" , 10 hours half life temperature = 67°C), 1,1'-azobis-1-cyclohexanecarbonitrile (manufactured by Otsuka Kagaku K.K., trade name "ACHN", 10 hours half life temperature = 87°C) and the like; and other compounds. These curing agents can be appropriately selected and used, depending on the molding temperature in molding an acrylic BMC, and it is preferable to use a curing agent showing a 10 hours half life temperature of 55°C or more, from the standpoint of the storage stability of an acrylic BMC. The 10 hours half life temperature of the curing agent is more preferably 65°C or more, particularly preferably 75°C or more, most preferably 80°C or more.

As the curing agent (D), one or two or more agents showing different 10 hours half life temperatures may be used.

Further, the acrylic BMC in the present invention can be compounded with an inorganic filler-containing resin particle (E) to give a mixture which is molded to obtain granite-like artificial marble having a grain pattern.

The content of the inorganic filler-containing resin particle (E) is not particularly restricted, and preferably in the range from 0.1 to 40 wt% based on the whole amount of an acrylic BMC. When this content is 0.1 wt% or more, a grain pattern excellent in design tends to be obtained, and when 40 wt% or less, a tendency is found that the kneading property in producing an acrylic BMC is excellent. The lower limit of this content is more preferably 1 wt% or more, particularly preferably 5 wt% or more. The upper limit thereof is preferably 30 wt% or less, particularly preferably 20 wt% or less.

The resin constituting the inorganic filler-containing resin particle (E) is not particularly restricted providing it is a resin which is not dissolved in methyl methacrylate, and examples thereof include cross-linked acrylic resins, cross-linked polyester resins, cross-linked polystyrene resins and the like. Cross-linked acrylic resins are preferable since they have high affinity with an acrylic monomer (A) used in the present invention and can provide a molded article showing beautiful appearance. This cross-linked acrylic resin may also contain a non-cross-linked acrylic polymer.

As the inorganic filler constituting the inorganic filler-containing resin particle (E), inorganic fillers listed for the above-mentioned inorganic filler (C) can be used, and they can be used in combination of two or more. Further, different inorganic fillers may be used in the inorganic filler-containing resin particle (E) and as the inorganic filler (C).

The inorganic filler-containing resin particle (E) may also contain a pigment, if necessary.

The inorganic filler-containing resin particle (E) may be used alone or in combination of two or more having different colors and particle sized.

The method of producing the inorganic filler-containing resin particle (E) is not particularly restricted, and for example, a method in which a resin molded article containing an inorganic filler obtained by polymerization and curing according to a heat press method, injection method and the like is ground, and classified through a sieve, is exemplified. For example, a method in which acrylic artificial marble is ground and classified is preferable.

Further, various additives such as reinforcing materials like glass fiber, carbon fiber and the like, and a polymerization inhibitor, coloring agent, low shrinkage agent, internal releasing agent and the like can be added, if necessary, to an acrylic BMC of the present invention.

An acrylic BMC of the present invention can be produced by kneading the above-mentioned component (A), component (B) and component (C), and if necessary, the component (D) and/or component (E) in addition the them, and thickening the mixture.

In the present invention, it is preferable that the components (A) to (C) which are raw materials of an acrylic BMC, and if necessary, at least one of the component (D) and/or component (E), are fed to a kneader while controlling the temperature. The operation that the components (A) to (C), and if necessary, at least one of the component (D) and/or component (E), are fed to a kneader while controlling the temperature means that the components (A) to (C), and if necessary, at least one of the component (D) and/or component (E), are kept at specific temperature before being fed to a kneader.

In general, in a method of thickening an acrylic polymer (B) by dissolving it into an acrylic monomer (A) to obtain an acrylic BMC, the thickening speed tends to be influenced by temperature. Therefore, when an acrylic BMC is produced in summer and winter, even if the production conditions (kind of a raw material, feeding speed, rotation speed of a kneader, jacket temperature of a kneader, and the like) of the acrylic BMC are the same, the raw material temperature varies depending on the outside air temperature, and resultantly, the qualities (dispersed condition of constituent components, viscosity of an acrylic BMC, and the like) of the acrylic BMC tend to vary from summer to winter. Therefore, by controlling the temperature of the components (A) to (C), and if necessary, of at least one of the component (D) and/or component (E), the raw materials can be fed to a kneader constantly at constant temperature irrespective of the outside air temperature, and there is a tendency that an acrylic BMC having constant qualities can be obtained irrespective of season.

The keeping temperature before feeding of the components (A) to (C) and if necessary, of the component (D) and/or component (E) is not particularly restricted, and preferably in the range from 0 to 100°C. In this case, the components may be kept at the same temperatures, or the keeping temperature may be varied for each component, however, it is preferable that the feeding average temperature obtained by averaging temperatures before feeding calculated according to the following formula is in the range from 10 to 50°C.

$$\text{Average temperature } [°C] = \frac{\sum_i Cpi \times Xi \times Ti}{\sum_i Cpi \times Xi}$$

Xi: weight ratio of i component [-]
Ti: temperature of i component [°C]
Cpi: specific heat of i component [J/kg ·°C]

When this feeding average temperature is 10°C or more, the kneading property (dispersibility of components) and thickening property of an acrylic BMC tend to be excellent, and when less than 50°C, excess heat is not applied on an acrylic BMC and the storage stability of the acrylic BMC tends to be excellent.

For setting the feeding average temperature in the range from 10 to 50°C, all components may be controlled and kept in the range from 10 to 50°C, or only main components may be controlled to give a feeding average temperature controlled in the rage from 10 to 50°C. In this case, there is a merit that equipments necessary for the temperature control can be reduced. When a curing agent (D) is mixed in an acrylic monomer (A) and fed, for preventing polymerization and curing of this acrylic monomer (A)/curing agent (D) mixture in a storage vessel, the feeding average temperature may also be controlled by maintaining the acrylic monomer (A)/curing agent (D) mixture at lower temperature and keeping other raw materials at higher temperatures.

The method of controlling the temperatures of components is not particularly restricted. For example, in the case of liquid components, a method in which the whole storage vessel is placed in a constant temperature room having temperature set at given value, a method in which a jacket is mounted on a storage vessel and a heat medium having temperature set at given value is flown, a method in which a heat exchanger is placed in the middle of a feeding piping for each component, and the like are listed. In the case of a powder component, a method in which air having controlled temperature is fed into a storage vessel is also exemplified, in addition to the above-mentioned methods.

In the present invention, the apparatus for kneading the above-mentioned components is not particularly restricted, providing it is an apparatus having a kneading function. For example, a batch-wise kneader may be permissible, or a continuous kneader having an extrusion function together with a kneading function may be permissible. The number of axes of a kneader is also not particularly restricted, one axis, two axes, or three axes may be allowable. For example, a roll, mixer, kneader, co-kneader, single screw extruder, twin screw extruder, continuous twin screw kneader, and the like are listed. Among these kneaders, continuous kneaders such as a co-kneader, single screw extruder, twin screw extruder, continuous twin screw kneader and the like can be used as a shaping machine, by installing a dice on a material discharge port.

These kneaders preferably have a temperature-controllable structure, and for example, a structure having a jacket through which a heat medium can be passed is preferable.

In the present invention, when a continuous kneader is used as the kneader, the method of feeding materials is not particularly restricted, powder components in constituent components of an acrylic BMC are preferably fed in a proportion in $\pm 7$ wt% based on the given feeding amount in 5 seconds. The reason for this is that the weight ratio of particularly powder components, among constituent components of an acrylic BMC, tends to affect the appearance of acrylic artificial marble obtained by molding an acrylic BMC. When powder components are fed in a proportion in $\pm 7$ wt% based on the given feeding amount in 5 seconds, even if the continuous production of an acrylic BMC is continued for a long period of time, there is a tendency that an acrylic BMC having a constant constituent component weight ratio can be obtained. This feeding precision of powder components is preferably in $\pm 2$ wt% based on the given feeding amount in 5 seconds, when acrylic artificial marble particularly having a dark color is obtained.

The feeding mode of powder components in the present invention is not particularly restricted, and any of an intermittent feeding machine and a continuous feeding machine may be used, and for obtaining the above-mentioned feeding precision of powder components, powder components is preferably feed by a continuous feeding machine. When a continuous feeding machine is used, the constituent component weight ratio of the resulting acrylic BMC tends to be more uniform, as compared with the case of use of an intermittent feeding machine such as a bucket type feeding machine. As the continuous feeding machine, preferable is at least one of an screw type feeding machine, vibration type feeding machine, belt type feeding machine and circle type feeding machine. There is a tendency that these continuous feeding machines enable given amount feeding of powder components, and feeding in a proportion in the above-mentioned preferable feeding weight range based on the given feeding amount. These continuous feeding machines may be used alone or in combination of several matters arranged in series.

In a screw type feeding machine, particularly when the feeding amount of powder components is large, variation in feeding amount showing the same cycle as screw rotation tends to occur due to increase in the screw diameter used, therefore, for stably securing the above-mentioned feeding weight range, it is preferable to set a mesh material at the tip of a feeding tube attached to a screw type feeding machine, and a tendency occurs that suppressing this periodic feeding amount variation to minimum becomes possible. Further, use of a method in which powder components fed by a screw type feeding machine are fed to a continuous kneading machine after a feeding process by a vibration type feeding machine also manifest the same tendency and is particularly preferable.

When a belt type feeding machine is used, it is preferable to use a doctor blade set at given distance from a belt for enabling quantitative feeding of powder components, and a pair of blocking plates for keeping the feeding width of powder components constant. The powder components show a tendency that the area equivalent amount determined by them is constantly fed at constant ratio. When such a kit of belt type feeding machine is used, the raw materials and structures of a belt and a doctor blade are preferably determined under conditions for minimizing friction force on powder components. On the other hand, also regarding powder components, those not easily causing blocking particularly at a doctor blade part are preferably used. Use of a method in which powder components fed by the belt type feeding machine is fed to a continuous kneader after passing through a feeding process by a vibration type feeding machine is preferable, since a tendency occurs that variation in feeding due to slight blocking occurring at a doctor blade part of powder components is suppressed to minimum.

When a vibration type feeding machine is used, it is preferable to use a doctor blade set at given distance from a vibration plate, for enabling quantitative feeding of powder components, and a pair of blocking plates for keeping the feeding width of powder component constant, as in the case of a belt type feeding machine. The powder components manifest a tendency that the area equivalent amount determined by them is constantly fed at constant rate. When such a kit of vibration feeding machine is used, the raw materials and structures of a vibration plate, doctor blade and blocking plate are preferably determined under conditions for minimizing friction force on powder components, and while, also regarding powder components, those not easily causing blocking particularly at a doctor blade part are preferably used.

When a circle type feeding machine is used, there is a tendency that the quantitative feeding of powder components becomes possible, as in the case of a belt type feeding machine, and it is preferable to used a doctor blade set at given distance from a rotation plate. The powder components manifest a tendency that the area equivalent amount determined by them is constantly fed at constant rate. When such a kit of circle type feeding machine is used, the raw materials and structures of a rotation plate and a doctor blade are preferably determined under conditions for minimizing friction force on powder components, and while, also regarding powder components, those not easily causing blocking particularly at a doctor blade part are preferably used. In the case of a circle type feeding machine, it is also possible to use a known technology in which a powder on a rotation plate at the lowers stage gets stable properties and conditions, by providing a plurality stage of rotation plates.

Specific examples of a continuous feeding machine are described above, and these machines may be appropriately selected depending on the properties and conditions of a powder used and the powder feeding speed.

In the present invention, a method of charging the components (A) to (C) and if necessary, the component (D) and/or component (E) into a continuous feeding machine is not particularly restricted, and all components may be charged simultaneously, alternatively, all components may be pre-mixed before charging them.

For example, it may also be permissible that part of the component (B) is previously dissolved in the component (A) to increase the viscosity to a certain extent to give acrylic syrup showing excellent handling property, then, this acrylic syrup, rest of the component (B), the component (C), and if necessary, the component (D) and/or component (E) are charged into a continuous feeding machine. In this case, the component (A) may also be partially polymerized previously to produce in the component (A) a component (B) which is a polymer thereof, to give acrylic syrup, instead of dissolution of part of the component (B) into the component (A).

Further, for example, it may also be permissible that the component (D) is dissolved in the component (A) for making dispersion of the component (D) more uniform, then, this solution, the component (B), the component (C), and if necessary, the component (E) are charged into a continuous feeding machine. In this case, the component (D) may also be dissolved in acrylic syrup obtained by dissolving part of the component (B) into the component (A), or the component (D) may also be dissolved in acrylic syrup obtained by partially polymerizing the component (A), instead of dissolving the component (D) into the component (A).

Still further, for example, it may also be permissible that powdery components, the component (B), the component (C) and if necessary, the component (E) are pre-mixed previously, and this mixture is charged into a continuous feeding machine.

In the present invention, kneading and thickening may be effected simultaneously in one process, or each of them may be effected in one process, leading to two processes in total.

Furthermore, when a shaped acrylic BMC is obtained, all of kneading, thickening and shaping may be effected simultaneously in one process, alternatively, may be effected in two processes in total composed of (one process for kneading and thickening, and one process for shaping), (one process for kneading, and one process for thickening and shaping), or (one process for kneading and thickening, and one process for thickening and shaping), or kneading, thickening and shaping may be effected in separate processes, leading to three processes in total. When two or more divided processes are used, each process may be effected independently, or they may be effected continuously.

In the present invention, kneading, thickening and shaping may be all effected in one process as described above, however, depending on constituent components of an acrylic BMC, conditions suitable for kneading and conditions suitable for shaping may be different, and in such a case, it is preferable that kneading and shaping are divided into separate processes.

Particularly from the standpoint of the productivity of an acrylic BMC, it is preferable that at least kneading and thickening are effected in the same process. In this case, a kneader which can knead materials having high viscosity is preferably used, for example, apparatuses such as a kneader, co-kneader, twin screw extruder, continuous twin screw kneader and the like, are listed. Of them, particularly, a kneader, twin screw extruder, twin screw kneaders such as a continuous twin screw kneader and the like, are preferable.

In the present invention, when kneading, thickening and shaping is conducted in one step, a continuous kneader is used as the kneader, and it is preferable to attach a die at the tip of the continuous kneader.

In the present invention, when a continuous kneader is used as the kneader, a die is attached to the tip of the kneader, and kneading, thickening and shaping is conducted in one step, it is preferable that the tip pressure is from 300 to 1500 kPa. The tip pressure herein referred to is a value of a pressure gauge attached directly on the die. The tip pressure depends on the production speed of a BMC, the viscosity of a BMC produced, a die attached and the like, and is preferably selected appropriately in this range. When this tip pressure is 300 kPa or more, the kneading property of a BMC tends to be excellent, and when 1500 kPa or less, the shaping property of a BMC tends to be excellent, further, a tendency occurs that a material remains in a continuous kneader, or a material is not polymerized and cured in a continuous kneader.

Further, in the present invention, when at least kneading and thickening are effected in the same process, if a continuous kneader is used as the kneader, it is preferable to effect kneading under conditions that the specific rotation speed is in the range from 0.01 to 1.5 rpm·h/kg. Here, the specific rotation speed is a value obtained by dividing the rotation speed of an axis (revolution per minute, rpm) by the treating speed of an acrylic BMC. When the specific rotation speed is 0.01 rpm·h/kg or more, a tendency occurs that remaining and clogging of a material at a feeding port of a continuous kneader disappear, and when 1.5 rpm · h/kg or less, a tendency occurs that polymerization and curing of a material does not occur in a continuous kneader. The lower limit of this specific rotation speed is preferably 0.03 rpm · h/kg or more.

In the present invention, it is preferable to effect kneading under conditions that specific power obtained by the power (kW) of a continuous kneader by the treating speed (kg/h) of an acrylic BMC is in the range from 0.005 to 0.015. When the specific power is in this range, it is preferable to produce an acrylic BMC stably and continuously.

Further, in the present invention, when at least kneading and thickening are effected in the same process, if a continuous kneader is used as the kneader, it is preferable to knead constituent components of an acrylic BMC in a continuous kneader under such temperature and time conditions that when constituent components of an acrylic BMC is kneaded by a torque rheometer, a kneading torque of 1N · m or more is detected by this apparatus.

Here, the torque rheometer is an apparatus to detect the kneading torque generated in kneading a resin and the like, and for example, "Laboplast Mill" manufactured by Toyo Seiki Seisakusho K.K., "Plalsticoder" manufactured by Blabender Corp., "Polylabosystem" manufactured by Hake Corp. and the like are listed.

When kneading is effected in a continuous kneader under temperature and conditions so that this kneading torque is 1 N · m or more, a tendency occurs that kneading and thickening can be effected simultaneously in a continuous kneader, and there occurs a tendency that an acrylic BMC which is sufficiently thickened, having no stickiness and showing excellent handling property can be discharged continuously from a continuous kneader.

The lower limit of this kneading torque is preferably 3 N · m or more, more preferably 5 N · m or more. The upper limit of the kneading torque is not particularly restricted, and preferably 200 N · m or less, more preferably 100 N · m or less.

This kneading torque depends on a plurality of conditions such as constituent components of an acrylic BMC, kneading temperature, kneading time and the like. Therefore, it may be advantageous to set the kneading temperature and kneading time depending on constituent components of an acrylic BMC, so that a kneading torque of 1N · m or more is detected, in continuously producing an acrylic BMC.

Furthermore, in the present invention, when a continuous kneader is used as the kneader, in the case of effecting at least kneading and thickening in the same process, it is preferable to effect kneading.in a continuous kneader under such conditions that the consumption energy required for kneading constituent components of an acrylic BMC is 1 MJ/m$^3$ or more per unit volume of an acrylic BMC.

The consumption energy herein referred to is obtained by multiplying the kneading torque by the kneading torque, and for example, is a value measured by the above-mentioned torque rheometer "Laboplast Mill" manufactured by Toyo Seiki Seisakusho K.K., and means a consumption energy per unit volume of an acrylic BMC, observed when the above-mentioned components (A), (B) and (C), and if necessary, the component (D) are kneaded by an R60 type roller mixed of this Laboplast Mill.

When this consumption energy is 1 MJ/m$^3$ or more, a tendency occurs that kneading and thickening can be effected simultaneously in a continuous kneader, and there occurs a tendency that an acrylic BMC which is sufficiently thickened, having no stickiness and showing excellent handling property can be discharged continuously from a continuous kneader.

The lower limit of this consumption energy is preferably 5 MJ/m$^3$ or more, more preferably 10 MJ/m$^3$ or more. The upper limit of the consumption energy is not particularly restricted, and preferably 2000 MJ/m$^3$ or less, more preferably 1000 MJ/m$^3$ or less.

This consumption energy depends on a plurality of conditions such as constituent components of an acrylic BMC, kneading temperature, kneading time and the like. Therefore, it may be advantageous to set conditions such as the kneading temperature, kneading time and the like depending on constituent components of an acrylic BMC, so that this consumption energy is 1 MJ/m$^3$ or more, in continuously producing an acrylic BMC.

In the present invention, the kneading temperature is not particularly restricted, and it may be advantageous to select such a temperature that a kneading torque of 1N · m or more is detected and/or such a temperature that the consumption energy is 1 MJ/m$^3$ or more, depending on constituent components of an acrylic BMC and the kneading time, as described above, and the temperature is preferably in the range from 0 to 100°C. When the kneading temperature is in this range, the kneading property tends to be excellent. The lower limit of the kneading temperature is preferably 10°C or more, more preferably 20°C or more. The upper limit thereof is preferably 95°C or less, more preferably 90°C or less.

The kneading time is also not restricted particularly, and it may be advantageous to select such a time that a kneading torque of 1N · m or more is detected and/or such a temperature that the consumption energy is 1 MJ/m$^3$ or

more, depending on constituent components of an acrylic BMC and the kneading time, as described above.

In the present invention, by effecting kneading under such temperature and time conditions that a kneading torque of $1N \cdot m$ or more is detected by a torque rheometer and/or under such temperature and time conditions that the consumption energy is $1 MJ/m^3$ or more, an acrylic BMC can be produced continuously at a high production speed of 30 kg/h or more. The lower limit of the production speed of an acrylic BMC is more preferably 50 kg/h or more, particularly preferably 100 kg/h or more.

In the present invention, the production efficiency of a continuous kneader can be increased, by effecting kneading under such temperature and time conditions that a kneading torque of $1N \cdot m$ or more is detected by a torque rheometer and/or under such temperature and time conditions that the consumption energy is $1 MJ/m^3$ or more. The production efficiency of a continuous kneader is a value obtained by dividing the production speed (kg/h) of an acrylic BMC by {product of the square of a screw diameter ($mm^2$) and the number of screw}, and screw diameter is the most outer diameter of a screw. The production efficiency of this continuous kneader is preferably $0.01 kg/h \cdot mm^2$ or more, more preferably $0.015 kg/h \cdot mm^2$ or more, particularly preferably $0.02 kg/h \cdot mm^2$ or more, most preferably $0.025 kg/h \cdot mm^2$ or more.

In the present invention when the curing agent (D) is added in addition to the above-mentioned components (A), (B) and (C) and if necessary, the component (E) and they are kneaded in a continuous kneader, and at least kneading and thickening are effected in the same process, it is preferable to effect kneading under temperature conditions in the range from 30°C to {10 hours half life temperature of curing agent (D) - 10}°C.

The temperature herein referred to is a temperature of a kneaded substance in a continuous kneader, and when this temperature is 30°C or more, dissolution speed of an acrylic polymer (B) into an acrylic monomer (A) increases remarkably, and the thickening speed increases, thickening can be accomplished in a short period of time, leading to a tendency of improvement of the productivity of an acrylic BMC. When this temperature is not more than {10 hours half life temperature of curing agent (D) - 10}°C, kneading simultaneously with thickening becomes possible even under the presence of a curing agent (D), and a tendency is generated that kneading and thickening can be effected on one step. In this case, there is a tendency that continuous stable operation of a continuous kneader for a long period of time becomes possible, further, the storage stability of the resulting acrylic BMC tends to be excellent. Further, in the present invention, since kneading is effected simultaneously with thickening in the presence of a curing agent (D), uniform dispersibility of a curing agent (D) in an acrylic BMC increases, and curing property tends to be excellent. The lower limit of this kneading temperature is more preferably 35 °C or more, particularly preferably 40°C or more. The upper limit thereof is more preferably {10 hours half life temperature of curing agent (D) - 15}°C or less, particularly preferably {10 hours half life temperature of curing agent (D) - 20}°C, most preferably 60°C or less.

The viscosity of an acrylic BMC is preferably from $10^3$ to $10^6$ Pa $\cdot$ s. However, since the viscosity generally depends on temperature and shearing speed, the viscosity measured at a temperature of 50°C and a shearing speed of $100 s^{-1}$ is used as a typical value, in the present invention. When this viscosity of a BMC is $10^3$ Pa $\cdot$ s or more, the stickiness of an acrylic BMC tends to disappear, form retaining property tends to be excellent, and generation of excess burr in molding tends to be reduced. When this viscosity of a BMC is $10^6$ Pa $\cdot$ s or less, flowability in molding is excellent, leading to a tendency of excellent appearance of a molded article.

In the present invention, the kneading time is not particularly restricted, and preferably 5 minutes or less when a batch-wise kneaded is used, and preferably 1 minute or less in the case of a continuous kneader. When the kneading time is in the above-mentioned range, since heat history applied on an acrylic BMC in kneading decreases, there is a tendency that the storage stability of an acrylic BMC increases. In this case, in compounding an inorganic filler-containing resin particle (E) to produce a granite-like acrylic BMC, there is a tendency that swelling and dissolution of the inorganic filler-containing resin particle (E) in an acrylic monomer (A) are suppressed, and the resulting artificial marble tends to give a definite grain pattern, leading to excellent appearance. The lower limit is not particularly restricted, and preferably 10 seconds or more, more preferably 20 seconds or more.

An acrylic BMC of the present invention may be removed from a kneader, cured itself under heat and pressure without aging to give a molded article, and if necessary, may be discharged from a kneader, then, aged before being cured under heat and pressure.

Next, one example a method of producing an acrylic BMC of the present invention will be illustrated using a case in which a continuous kneader is used as the kneader.

An apparatus shown in Fig. 1 is used, and liquid components among constituent components of an acrylic BMC are charged into a tank. The liquid component herein used is not particularly restricted providing it can pass through a liquid feeding pump 3 and a liquid feeding pump 4.

As the materials of the tank 1, liquid feeding pump 3 and liquid feeding pump 4, it is preferable to select a raw material par of which in contact with liquid is not corroded chemically with the liquid component and/or a raw material which does not denature a liquid component. The liquid feeding pump 3 may advantageously be one having a quantitative feeding ability as typified by a gear pump and snake pump, for example, and preferably selected in vies of the physical properties of a liquid component, such as viscosity and the like. Further, depending on the kind of a liquid component, another combination of the tank 1, liquid feeding pump 3 and liquid feeding pump 4 may further added.

On the other hand, among constituent components of an acrylic BMC, liquid components are charged into a vessel 5. The liquid component herein used may advantageously be one which passes through a quantitative feeder 6 and piping 7. As the material of the vessel 5, it is preferable to use a raw material which is not influenced chemically and physically by a liquid component and/or a raw material which does not denature a liquid component. Further, depending on the kind of a liquid component, another combination of the vessel 5, quantitative feeder 6 and piping 7 may be further added.

The quantitative feeder 6 is one such as, for example, a screw feeder and the like, and may advantageously be one having such a powder carrying ability. It is preferable that the ratio (ratio by weight) of the feeding amount of the quantitative feeder 6 to the feeding amount of the liquid feeding pump 3 is as constant as possible. Therefore, it is preferable to control the charging amounts of a liquid component and a powder component into a hopper while continuously measuring the weights. As the control method, for example, a method of measuring the weights of the tank 1 and vessel 5, and other known method can be used.

The piping 7 is used for charging a powdery component into the hopper 8. A liquid component and a powdery component fed to the hopper 8 are fed to a continuous twin screw kneader 9. The liquid component and powdery component fed are kneaded by the continuous twin screw kneader 9, and simultaneously thickened, and to give an excellent BMC dough showing excellent handling property without stickiness, in being extruded through the tip of the continuous twin screw kneader 9.

The BMC dough may be extruded from the front side of the tip part of the continuous twin screw kneader 9 or extruded from the lower part of the tip.

An extruding die 10 is placed in front of the tip part or at lower part of the tip of the continuous twin screw kneader 9, and restricts the sectional form of the dough extruded continuously. The dough thickened in the continuous twin screw kneader 9 is shaped into a given form by being extruded through the die 10. This shaped substance is cut into a given length by a cutter 11. The cutter 11 is for example a guillotine cutter or the like, however, is not limited to this providing it has the equivalent function. Further, a pressure gauge 9' is mounted on the tip part of a kneader directly above a die attaching part of the continuous twin screw kneader 9.

Fig. 2 schematically shows one example of an acrylic BMC shaped into a sheet form. In Fig. 2, p represents length, Q represents thickness, and R represents width. P, Q and R may advantageously be controlled into given dimensions appropriately. This acrylic BMC shaped substance may also be, directly after production, carried into a mold to be molded.

This acrylic BMC shaped substance may be carried by a conveyor 12, after discharged through the die 10, as shown in Fig. 1. When a longer time is required until molding, it is preferable, as shown in Fig. 1, to cover the upper side and lower side with a cover films 13 and 14, respectively, for sealing. As these covers 13 and 14, it is preferable to use a material having a barrier property against monomers contained in the acrylic BMC shaped substance. As the film having a barrier property, for example, polyolefin films such as polyethylene, polypropylene and the like, polyamide films, polyester films, cellophane, poval films, ethylene-polyvinyl alcohol copolymer films, vinyl chloride-vinylidene chloride copolymer film and the like are listed. Further, this cover film may also be a laminate film obtained by laminating two or more films.

When an acrylic BMC shaped substance sealed with a cover film is carried, it is preferable to accommodate this substance in a vessel and the like, to keep the shaped form.

Fig. 3 shows an example of a die used in the present invention. 21 shows a first example of the die, and 22 shows a second example of the die 22. Fig. 4 shows an example of production facility of an acrylic BMC using a batch-wise kneader. The batch-wise kneader 23 contains two axes 24 having mixing blades, and a jacket 25.

Next, a method of producing acrylic artificial marble molded article of the present invention will be described below.

In the present invention, acrylic artificial marble can be obtained by filling the above-mentioned acrylic BMC into a mold, and curing this under heat and pressure. As the specific method of this curing under heat and pressure, a press molding method, injection molding method, extrusion molding method and the like are listed, however, the method is not particularly limited to them.

In this case, though the heating temperature is not particularly restricted, it is preferably in the range from 80 to 150°C. When the heating temperature is 80°C or more, the curing time can be shortened, leading to a tendency of increased productivity, and when 150°C or less, a tendency occurs that the resulting molded article gets an excellent appearance. The lower limit of heating temperature is more preferably 85°C or more, and the upper limit is more preferably 140°C or less. In this temperature range, it may be permissible that a temperature difference is made between an upper mold and a lower mold and these molds are heated.

The pressing value is not particularly restricted, and preferably in the range from 1 to 20 MPa. When the pressing value is 1 MPa or more, filling property of an acrylic BMC into a mold tends to be excellent, and when 20 Mpa or less, excellent molding appearance tends to be obtained. The lower limit of the pressing value is more preferably 2 MPa or more, and the upper limit is more preferably 15 MPa or less.

The molding time may be appropriately selected depending on a molded article.

An acrylic molded article obtained by curing under heat and pressure an acrylic BMC obtained by a continuous production method of the present invention shows no color shade and has excellent appearance. Regarding the extent of color shade, there is a tendency that when the color of a molded article is darker (L* of a molded article is smaller), color shade is formed more easily, and particularly when L* of a molded article is 70 or less, it is preferable that the maximum value ($\Delta$E*MAX) of the chrominance ($\Delta$E*) between color measuring points obtained from color measured values (L*, a*, b*) measured at any three ore more positions of the molded article is not more than 3.

The present invention will be illustrated specifically below referring to examples. In the examples, parts and % are all by weight.

<Physical properties of polymer particle>

- Average particle size: It was measured by using a laser diffraction/scattering type particle size distribution measuring apparatus (LA-910, manufactured by Horiba Seisakusho K.K.).
- Degree of swelling: A polymer powder was placed into a 100 ml measuring cylinder, compacted to 5 ml by slightly tapping several times, then, methyl methacrylate cooled to 10°C or lower was charged so as to give a total amount of 100 ml, they were stirred quickly so that the mixture becomes uniform totally, then, the measuring cylinder was kept in a constant temperature chamber at 25°C for 1 hour, the volume of the polymer layer (polymer containing methyl methacrylate) at this time was measured, and the ratio of this volume to the original volume (5 ml) of the polymer powder was calculated as the degree of swelling.
- Weigh-average molecular weight: It is a value in terms of polystyrene according to a GPC method, and measured under the following conditions, depending on the range of the weight-average molecular weight.

When the weight-average molecular weight is 100000 or less:

Apparatus: High performance GPC apparatus HLC-8120, manufactured by Tosoh Corp.
Column: TSKgelG2000H$_{XL}$ and TSKgelG4000H$_{XL}$ are connected in series. Manufactured by Tosoh Corp.
Oven temperature: 40°C
Eluent: Tetrahydrofuran
Sample concentration: 0.4 wt%
Flow rate: 1 ml/min.
Injection amount: 0.1 ml
Detector: RI (differential refractometer)
When the weight-average molecular weight is over 100000 and less than 1000000:

Apparatus: High performance GPC apparatus HLC-8020, manufactured by Tosoh Corp.
Column: Three TSKgelGMH$_{XL}$ are connected in series.
Oven temperature: 38°C
Eluent: Tetrahydrofuran
Sample concentration: 0.4 wt%
Flow rate: 1 ml/min.
Injection amount: 0.1 ml
Detector: RI (differential refractometer)
When the weight-average molecular weight is over 1000000:

Apparatus: High performance GPC apparatus HLC-8020, manufactured by Tosoh Corp.
Column: Two TSKgel, GMH$_{HR}$-H(30) are connected in series. Manufactured by Tosoh Corp.
Oven temperature: 40°C
Eluent: Tetrahydrofuran
Sample concentration: 0.4 wt%
Flow rate: 1 ml/min.
Injection amount: 0.1 ml
Detector: RI (differential refractometer)

Since, as the polystyrene standard polymer, there are only provided having a weight-average molecular weight of up to 2000000, when those having a weight-average molecular weight of 1000000 or more are measured, a polystyrene calibration curve was extrapolated up to a point of a weight-average molecular weight of 5000000000, for conversion.

· Bulk density: It was measured according to JIS R 6126-1790.
· Oil absorption: It was measured according to JIS R 5101-1991, and a point directly before steep softening of a putty-like block by the last one drop of linseed oil was regarded as the end point.

<Measurement of rotation speed of kneader>

A rotation detector was attached to an axis of a kneader, and the rotation speed was measured.

<Measurement of power for mixing time>

A power meter was attached to a motor of a kneader, and the power was measured.

<Temperature setting of acrylic BMC produced>

A temperature measuring resistor was inserted into an acrylic BMC discharged from a shaping die, and the temperature was measured.

<Pressure measurement at tip part of continuous twin screw kneader>

A pressure gauge was attached to the tip part of a kneader, directly above the die attaching part, and the designation was read.

<Measuring method of mixing time>

The remaining time in a kneader was measured as a mixing time. The measuring method of the remaining time is a method in which barium sulfate is added into a hopper at a certain moment, an acrylic BMC discharged every 5 seconds directly after addition is sampled, and the concentration of barium in each sample is measured by fluorescent X-ray. The time at which the measured value is most large is regarded as a mixing time.

<Measurement of viscosity of BMC>

It was measured by a capillograph available from Toyo Seiki Seisakusho K.K. The viscosity of a BMC depends on temperature and shearing speed, and in the present invention, the viscosity measured at a temperature of 50°C and a shearing speed of $100 \text{ s}^{-1}$ is used as a typical value.

<Measurement of kneading torque>

Kneading was conducted while changing the kneading temperature under the following conditions, using Laboplast Mill (C model: 50C150) manufactured by Toyo Seiki Seisakusho K.K. as the torque rheometer, and the kneading torque was measured.
    Mixer: R-60 type roller mixer
    Revolution: 30 rpm
    Material filling amount: 75 g

<Measurement of consumption energy of acrylic BMC>

Kneading was conducted while changing the kneading temperature under the following conditions, using Laboplast Mill (C model: 50C150) manufactured by Toyo Seiki Seisakusho K.K., and the consumption energy was measured.
    Mixer: R-60 type roller mixer
    Revolution: 30 rpm
    Material filling amount: 75 g

<Continuous operation property of continuous twin screw kneader>

○ : A continuous twin screw kneader was operated for as long as 3 hours or more, however, an acrylic BMC shaped substance could be discharged stably and continuous operation for a long period of time was possible.
× : curing occurred in a continuous twin screw kneader, and an acrylic BMC could not be discharged continuously for a long period of time.

<Thickening property of acrylic BMC>

○ : Directly after extruded from the tip of a continuous twin screw kneader, or directly after removed from a batch-wise kneader, thickening had progressed to a condition of no stickiness, and a BMC dough showing excellent handling property was obtained.
× : Directly after extruded from the tip of a continuous twin screw kneader, or directly after removed from a batch-wise kneader, thickening had progressed to a certain extent to give a BMC dough, however, this had substance had stickiness and manifested poor handling property.

<Storage stability of acrylic BMC>

⊚ : When an acrylic BMC was left under an atmosphere of 23°C, it was not cured even after three months, namely, the storage stability was extremely excellent.
○ : When an acrylic BMC was left under an atmosphere of 23°C, it was not cured after one month, namely, the storage stability was excellent.
× : When an acrylic BMC was left under an atmosphere of 23°C, it was cured in two weeks/

<Uniform curing property of acrylic BMC>

○ : Five pieces were sampled randomly from an acrylic BMC, and the sampled acrylic BMC was molded. Poor curing was not found at all in any of five molded articles.
× : Five pieces were sampled randomly from an acrylic BMC, and the sampled acrylic BMC was molded. One or more molded articles having poor curing were found.

<Clearness of grain pattern>

○ : A grain pattern was extremely clear, and extremely excellent in design.
Δ : A grain pattern was blur, and poor in design.
× : An inorganic filler-containing resin particle which is a material of a grain pattern had been dissolved, no granite-like appearance was found, and design was extremely poor.

<Measurement of color of acrylic molded article>

According to JIS Z 8720-1980. L*, a* and b* were measure, and the chrominance ΔE* was calculated from these values.

(1) Production Example of polymer particle (P-1)

Into a reaction vessel equipped with a cooling tube, thermometer, stirrer, dropping funnel and nitrogen introducing tube was charged 750 parts of distilled water, 4 parts of sodium alkyldiphenyl ether sulfonate (manufactured by Kao Corp., trade name "Pellex SS-H") as a surfactant, and 1 part of potassium persulfate as a polymerization initiator, and the mixture was heated to 70°C while stirring under a nitrogen atmosphere. To this was added dropwise a mixture composed of 500 parts of methyl methacrylate and 5 parts of a surfactant, sodium dialkylsulfosucciante (manufactured by Kao Corp., trade name "Pellex OT-P" ) over 3 hours, then, the mixture was kept under this condition for 1 hour, further, heated up to 80 °C and kept for 1 hour, then, cooled to room temperature, to complete emulsion polymerization, obtaining an emulsion. The primary particles of a polymer of the resulted emulsion had an average particle size of 0.10 μm.

Subsequently, this emulsion was subjected to spray drying treatment at inlet temperature/outlet temperature of 150°C/90°C using a spray drying apparatus (L-8 type, manufactured by Ookawara Kakokisha K.K.), to obtain a polymer powder (P-1).

The resulted polymer powder (P-1) had an average particle size of 30 μm, a specific surface area of 50 $m^2$/g, a bulk density of 0.40, an oil absorption for linseed oil of 100 ml/100 g, and a weight-average molecular weight of 600000. The degree of swelling for MMA was evaluated. Since the powder was dissolved completely, the degree of swelling was evaluated as 20-fold or more.

(2) Production Example of polymer particle (P-2)

Into a reaction vessel equipped with a cooling tube, thermometer, stirrer, and nitrogen introducing tube was charged 1150 parts of distilled water, 5 parts of a special carboxylic acid type surfactant (manufactured by Kao Corp., trade name "Latemul ASK" ) as a surfactant, and 1 part of potassium persulfate as a polymerization initiator, and 400 parts of methyl methacrylate and 100 parts of ethyl methacrylate as a monomer, and 0.15 parts of n-octylmercaptane as a chain transfer agent, and the mixture was heated to 50°C while stirring under a nitrogen atmosphere. The mixture was kept under this condition for 5 hours, then, cooled to complete emulsion polymerization, obtaining an emulsion. The primary particles of a polymer of the resulted emulsion had an average particle size of 0.20 μm.

Into a reaction vessel equipped with a thermometer, stirrer, and vapor introducing tube was charged 300 parts of distilled water and 0.2 parts of sulfuric acid. Then, this sulfuric acid aqueous solution was heated to 40°C by introducing a vapor while stirring, then, to this was added 150 parts of the above-mentioned emulsion, and the mixture was kept at 40°C for 5 minutes, to flocculate polymer particles. Then, the mixture was heated up to 65 °C, then, to this was added n-heptane, and the resulted mixture was kept at 65°C for 5 minutes to aggregate flocculated polymer particles. Then, the mixture was gradually heated to evaporate n-heptane, and heated up to 95°C and kept for 5 minutes to cause solidification, to complete coagulation. The coagulated polymer particles were filtrated, and dried to obtain a polymer powder (P-2).

The resulted polymer powder (P-2) had an average particle size of 150 μm, a specific surface area of 0.5 $m^2$/g, a bulk density of 0.37, an oil absorption for linseed oil of 150 ml/100 g, and a weight-average molecular weight of 550000. The degree of swelling for MMA was evaluated. Since partially undissolved parts remained though part of the powder was dissolved, the degree of swelling was evaluated as 0.8.

(3) Production Example of polymer particle (P-3)

A polymer powder (P-3) was obtained by effecting emulsion polymerization under the same conditions as in the production example of the polymer powder (P-2) except that the monomers used in emulsion polymerization were 400 parts of methyl methacrylate and 100 parts of n-butyl acrylate, and the amount of a chain transfer agent was 0.004 parts, and the resulted emulsion was coagulated un-der the same conditions as in the production example of the polymer powder (P-2).

The resulted polymer powder (P-3) had an average particle size of 130 μm, a specific surface area of 0.5 $m^2$/g, a bulk density of 0.34, an oil absorption for lin-seed oil of 145 ml/100 g, and a weight-average molecular weight of 3800000. The degree of swelling for MMA was evaluated. Since partially undissolved parts remained though part of the powder was dissolved, the degree of swelling was evaluated as 0.8.

(4) Production Example of polymer particle (P-4)

Into a reaction vessel equipped with a cooling tube, thermometer, stirrer, and nitrogen introducing tube was charged 800 parts of distilled water and 1 part of polyvinyl alcohol (degree of saponification: 88%, degree of polymerization: 1000), then, to this was added a solution prepared by dissolving 0.8 parts of azobisisobutyronitrile as a polymerization initiator and 1.2 parts of n-dodecylmercaptane as a chain transfer agent into a monomer mixture composed of 492 parts of methyl methacrylate and 8 parts of methyl acrylate, and the mixture was heated up to 80°C while stirring at 300 rpm under a nitrogen atmosphere, and heated at this temperature for 2 hours. Then, the mixture was heated up to 90°C and heated for 2 hours, then, cooled to room temperature, to complete suspension polymerization. The resulted suspension was filtrated and washed, then, dried by a hot air drier at 50°C, to obtain a polymer powder (P-4) having an average particle size of 350 µm.

The resulted polymer powder (P-4) had a specific surface area of 0.07 m$^2$/g, a bulk density of 0.73, an oil absorption for linseed oil of 50 ml/100 g, and a weight-average molecular weight of 110000. The degree of swelling for MMA was evaluated, to find that the degree of swelling was 1.2.

Table 1

| | Compo-sition (wt%) | Method of Producing powder | Specif-ic sur-face area ($m^2$/g) | Average Particle size($\mu$m) | | Degr-ee of swell-ling | Weight-average molec-ular weight | Bulk density (g/ml) | Oil absorption (ml/100g) |
|---|---|---|---|---|---|---|---|---|---|
| | | | | Pri-mary par-ticle | Seco-ndary par-ticle | | | | |
| P-1 | MMA=100 | Emulsion polymeriz-ation/spr-ay drying | 50 | 0.10 | 30 | 20$\leqq$ | 600000 | 0.40 | 100 |
| P-2 | MMA/EA =80/20 | Emulsion polymeriz-ation/coa-gulation | 0.5 | 0.20 | 150 | 0.8 | 550000 | 0.37 | 150 |
| P-3 | MMA/nBA =80/20 | Emulsion polymeriz-ation/coa-gulation | 0.5 | 0.20 | 130 | 0.8 | 3800000 | 0.34 | 145 |
| P-4 | MMA/MA =98/2 | Suspension polymeriz-ation/ drying | 0.07 | 350 | | 1.2 | 110000 | 0.73 | 50 |

Abbreviations in Table 1 are shown below.
MMA:methyl methacrylate, MA:methyl acrylate, EA:ethyl acrylate,
nBA:n-butyl acrylate

(5) Method of producing inorganic filler-containing resin particle (E)

Into a monomer mixture composed of 23 parts of methyl methacrylate (manufactured by Mitsubishi Rayon Co., Ltd., trade name "Acryester M" ) and 2 parts of ethylene glycol dimethacrylate (manufactured by Mitsubishi Rayon Co., Ltd., trade name "Acryester ED" ) was added 0.025 parts of 6-di-t-butyl-4-methylphenol (manufactured by Sumitomo Chemical Co., Ltd., trade name "Sumilizer BHT" ) as a polymerization inhibitor, 0.5 parts of t-amyl peroxy-3,5,5-trimethyl hexanoate (manufactured by Kayaku Akuzo K.K., trade name "Kayaester AN" , 10 hours half life temperature = 95°C) as a curing agent, 0.15 parts of zinc stearate as an internal releasing agent, 60 parts of aluminum hydroxide (manufactured by Sumitomo Chemical Co., Ltd., trade name "CWL-325J" ) as an inorganic filler, 0.05 parts of a white inorganic pigment or black inorganic pigment as a coloring agent, and 15 parts of the polymer powder (P-1) obtained in Production Example (1) as a thickener, and the mixture was kneaded for 10 minutes by a batch-wise kneader (manufactured by Moriyama Seisakusho K.K., MS type double arm kneader, G30-10 type) to obtain an acrylic BMC.
Then, 700 g of this acrylic BMC was charged into a plate mold of 200 mm square, and cured under heat and pressure for 10 minutes under conditions of an upper mold temperature of 130°C, a lower mold temperature of 115°C and a pressure of 10 MPa, to obtain white or black acrylic artificial marble having a thickness of 10 mm.
The resulted acrylic artificial marble was ground by a crasher, and classified through a sieve, to obtain a white or black inorganic filler-containing resin particle (E).

[Example I-1]

Into a mixture composer of 6.5 parts of methyl methacrylate (manufactured by Mitsubishi Rayon Co., Ltd., trade name "Acryester M" ), 6.5 parts of isobornyl methacrylate (manufactured by Mitsubishi Rayon Co., Ltd., trade name "Acryester IBX" ), 10.4 parts of neopentyl glycol dimethacrylate (manufactured by Shin Nakamura Kagaku K.K., trade name "NK Ester NPG" ) and 0.01 part of 2,6-di-t-butyl-4-methylphenol (manufactured by Sumitomo Chemical Co., Ltd., trade name "Sumilizer BHT" ), as an acrylic monomer (A), was pre-mixed and dissolved 0.6 parts of 1,1-bis (t-butyl peroxy)3,3,5-trimethylcyclohexane (manufactured by NOF Corp., trade name "Perhexa 3M", 10 hours half life temperature = 90°C ) as a curing agent (D), and this pre-mixture was charged into a tank 1A, and fed continuously into a continuous twin screw kneader 9 (S-2 type KRC kneader manufactured by Kurimoto Ltd., screw diameter = 50 mm, L/D = 13.7) at a speed of 795 g/min. through a liquid feeding tube 4A connected to the continuous twin screw kneader 9, by a snake pump 3A manufactured by Hyoshin Sobi K.K.
The polymer powder (P-1) as an acrylic polymer (B) was charged into an SUS vessel 5B appended to a screw feeder 6B manufactured by Kuma Engineering K.K., and fed continuously to a hopper 8 appended to the continuous twin screw kneader 9 at a speed of 517 g/min.
Aluminum hydroxide (manufactured by Sumitomo Chemical Co., Ltd., trade name "CWL-325J" ) was charged as an inorganic filler (C) into an SUS vessel 5C appended to a screw feeder 6C manufactured by Kuma Engineering K.K., and fed continuously into the hopper 8 appended to the continuous twin screw kneader 9 as a speed of 2021 g/min.
By storing all of 1A, 5B and 5C in a constant temperature chamber, the temperatures of the components (A) to (D) were constantly maintained at 30°C.
Further, a heat medium temperature-controlled at 45°C was passed through a jacket of a barrel of the continuous twin screw kneader 8.
According to the above-mentioned method, the components (A) to (D) were charged simultaneously into the continuous twin screw kneader, and an acrylic BMC in the form of sheet was continuously produced at a speed of 200 kg/h through a die (corresponding to die 21 in Fig. 3, inlet: 40 mm×35 mm, outlet: 80 mm×20 mm, rectangular, length from inlet to outlet is 100 mm) attached to the lower part of the tip of the continuous twin screw kneader 9. The designation of a pressure gauge 9' attached directly above a die attaching part was 1100 kPa. The time of remaining of a material in the continuous twin screw kneader was about 30 seconds. The extruded BMC had a temperature of 63°C and it could be extruded without problem.
An acrylic BMC in the form of sheet was produced continuously under this condition. As a result, an acrylic BMC in the form of sheet was obtained stably, even when the operation was continued for 3 hours or longer.
The resulted acrylic BMC in the form of sheet was a BMC manifesting excellent handling property without stickiness, even directly after discharged from the continuous twin screw kneader, and the viscosity was $10^4$ Pa · s.
This acrylic BMC was sealed with a laminate film (manufactured by Star Plastic Industry K.K., trade name "Eslap HB" ) having a three-layer structure of polyolefin/polyamide/polyolefin, having a thickness of 80 μm, and left under an atmosphere of 23°C. This acrylic BMC was not cured even three months after being left, and revealed extremely excellent storage stability.
Then portions each having a weight of 700 g were randomly sampled at five positions from this acrylic BMC in the form of sheet. 700 g of this sampled acrylic BMC was filled in a plate mold of 200 mm square, and cured under heat and pressure for 10 minutes under conditions of an upper mold temperature of 130°C, a lower mold temperature of 115°C and a pressure of 10 MPa, to obtain five plates of acrylic artificial marble having a thickness of 10 mm. Any of the resulted five pieces of artificial marble had high surface gloss, contained no part of curing failure, and had extremely excellent appearance.

[Comparative Example I-1]

The same operation was carried out as in Example I-1 except that a die was not attached to a discharge port of a kneader. Raw materials which received insufficient, mixing were discharged from the discharging port. The designation of a pressure gauge was almost 0.

[Comparative Example I-2]

The same operation was carried out as in Example I-1 except that the form of a die discharging port was a rectangular form of 40 mm×20 mm. The discharging amount from the die 10 minutes after initiation of production was 170 kg/h, and the designation of a pressure gauge of a kneader was 2400 kPa. Remaining of a raw material in a hopper was observed, and continuous production of an acrylic BMC was impossible.

[Example I-2]

The same operation as in Example I-1 was effected, to continuously produce an acrylic BMC in the form of sheet at a speed of 200 kg/h, excepting that 13.2 parts of methyl methacrylate, 4.1 parts of neopentyl glycol dimethacrylate and 0.5 parts of ethylene glycol dimethacrylate were used as an acrylic monomer (A) and into syrup prepared by dissolving 9.6 parts of the bead (P-4) in Production Example (4) in the acrylic monomers (A) (27.4 parts, in total) was dissolved 0.5 parts of t-amyl peroxy benzoate (manufactured by Kayaku Akuzo K.K., trade name "KD-1" ) as a curing agent (D) and 0.15 parts of zinc stearate as an internal releasing agent, and the feeding speed thereof was 929 g/min, excepting that the acrylic powder (P-1) was used as an acrylic polymer (B), and the feeding speed thereof was 225 g/min., excepting that aluminum hydroxide (manufactured by Sumitomo Chemical Co., Ltd., trade name "CWL-325J") was fed as an inorganic filler (C) at a speed of 1543 g/min., and excepting that the pre-mixture of a white inorganic filler-containing resin particle and a black inorganic filler-containing resin particle (ratio by weight: 1:1, average particle size: 300 μm) produced in Production Example (5) was used as an inorganic filler-containing resin particle (E), charged in an SUS vessel 5E, and fed by a screw feeder 6E at a speed of 636 g/min. The remaining time of a material in the continuous twin screw kneader was about 30 seconds. The designation of a pressure gauge was 900 kPa. The extruded BMC had a temperature of 60°C and could be extruded without problem. The produced BMC had a viscosity of $10^4$ Pa · s and a plate of artificial marble having excellent appearance was produced by press-molding this BMC.

[Comparative Example I-3]

The same operation was carried out as in Example I-2 except that a die was not attached to a discharge port of a kneader. Raw materials which received insufficient mixing were discharged from the discharging port. The designation of a pressure gauge was almost 0.

[Comparative Example I-4]

The same operation was carried out as in Example I-1 except that the form of a die discharging port was a rectangular form of 40 mm×20 mm. The discharging amount from the die 10 minutes after initiation of production was 180 kg/h, and the designation of a pressure gauge of a kneader was 2500 kPa. Remaining of a raw material in a hopper was observed, and continuous production of an acrylic BMC was impossible.

Table 2

| | Acrylic monomer (A) | | | | | Acrylic polymer (B) | | Inorganic filler (C) | Curing agent (D) | | Inorganic filler-containing resin particle (E) |
| | MMA | IBX | NPG | ED | St | Kind | Amount | | Kind | Amount | |
|---|---|---|---|---|---|---|---|---|---|---|---|
| Ex.I-1 | 6.5 | 6.5 | 10.4 | - | - | P-1 | 15.6 | 61 | Perhaxa 3M | 0.6 | - |
| Ex.I-2 | 13.2 | - | 4.1 | 0.5 | - | P-1 P-4 | 6.8 9.6 | 46.6 | KD-1 | 0.5 | 19.2 |

Abbreviations in Table 2 are shown below.
MMA:methyl methacrylate, IBX:isobornyl methacrylate,
NPG:neopentyl glycol dimethacrylate, EDMA:ethylene glycol dimethacrylate,
Perhexa 3M:1,1-bis(t-butyl peroxy)3,3,5-trimethylcyclohexane,
KD-1:t-amyl peroxy benzoate

[Example II-1]

23.41 parts of a mixture composed of 6.5 parts of methyl methacrylate, 6.5 parts of isobornyl methacrylate, 10.4 parts of neopentyl glycol dimethacrylate and 0.01 part of 2,6-di-t-butyl-4-methylphenol, as an acrylic monomer (A), 15.6 parts of the polymer powder (P-1) as an acrylic polymer (B), and 61 parts of aluminum hydroxide (manufactured by Sumitomo Chemical Co., Ltd., trade name "CWL-325J" ) as an inorganic filler (C) were charged into a mixer of Laboplast Mill manufactured by Toyo Seiki Seisakusho K.K., and kneaded at 40°C for 45 seconds, to detect a kneading torque of 39.2 N · m.

Separately, into a mixture composed of 6.5 parts of methyl methacrylate, 6.5 parts of isobornyl methacrylate, 10.4 parts of neopentyl glycol dimethacrylate and 0.01 part of 2,6-di-t-butyl-4-methylphenol, as an acrylic monomer (A), was pre-mixed and dissolved 0.6 parts of t-amyl peroxy-3,5,5-trimethyl hexanoate (manufactured by Kayaku Akuzo K.K., trade name "Kaya Ester AN" , 10 hours half life temperature = 95°C) as a curing agent, and the mixture was charged into a tank 1A, and fed continuously into a hopper 8 appended to a continuous twin screw kneading extruder 9 (S-2 type KRC kneader manufactured by Kurimoto Ltd., screw diameter = 50 mm, L/D = 13.7) by a snake pump 3A manufactured by Hyoshin Sobi K.K.

The polymer powder (P-1) was charged as an acrylic polymer (B) into an SUS vessel 5B appended to a screw feeder 6B manufactured by Kuma Engineering K.K., and fed continuously to a hopper 8 appended to the continuous twin screw kneading extruder 9.

Aluminum hydroxide (manufactured by Sumitomo Chemical Co., Ltd., trade name "CWL-325J" ) was charged as an inorganic filler (C) into an SUS vessel 5C appended to a screw feeder 6C manufactured by Kuma Engineering K.K., and fed continuously into the hopper 8 appended to the continuous twin screw kneading extruder 9.

Further, a heat medium temperature-controlled at 40°C was passed through a jacket of a barrel of the continuous twin screw kneading extruder 9.

The components (A), (B) and (C) were charged into a continuous twin screw kneading extruder at charging speeds of 517 g/min., 336 g/min. and 1314 g/min., respectively, so that the average remaining time of the materials in the continuous twin screw kneading extruder for an acrylic BMC was about 45 seconds.

According to the above-mentioned method, an acrylic BMC was produced continuously, and an acrylic BMC in the form of sheet having a thickness of 20 mm was obtained from a die 10 attached to the lower part of the tip of the continuous twin screw kneading extruder, at a production speed of 130 kg/h. In this operation, the production efficiency of the acrylic BMC was 0.026 kg/h · mm$^2$.

The resulted acrylic BMC in the form of sheet had been thickened even directly after discharged from the continuous twin screw kneading extruder, and it manifested excellent handling property without stickiness.

Then, 700 g of the resulted acrylic BMC was charged into a plate mold of 200 mm square, and cured under heat and pressure for 10 minutes under conditions of an upper mold temperature of 130°C, a lower mold temperature of 115°C and a pressure of 10 MPa and press-molded to obtain a plate of acrylic artificial marble having a thickness of 10 mm. The resulted artificial marble had high surface gloss and extremely excellent appearance.

[Comparative Example II-1]

Kneading was effected at 20°C for 20 seconds using a mixer of Laboplast Mill manufactured by Toyo Seiki Seisakusho K.K., at the same composition as in Example II-1, while changing temperature and time, to obtain a kneading torque of as low as only 0.5 N · m.

Separately, according to the same method as in Example II-1, components were charged into the continuous twin screw kneading extruder, and an acrylic BMC was kneaded continuously. However, the charging speed of the component (A) was changed to 1193 g/min., the charging speed of the component (B) was changed to 775.5 g/min., and the charging speed of the component (C) was changed to 3031.5 g/min. so that the average remaining time of the materials in the continuous twin screw kneading extruder was about 20 second, and the temperature of the heat medium passed through a jacket of a barrel of the continuous twin screw kneading extruder was altered to 20 °C.

According to the above-mentioned method, an acrylic BMC was kneaded continuously. However, the discharged substance from an extrusion die 10 attached to the lower part of the tip of the continuous twin screw kneading extruder was not thickened, and in the form of semi-liquid having stickiness and was not a dough.

[Example III-1]

23.41 parts of a mixture composed of 6.5 parts of methyl methacrylate, 6.5 parts of isobornyl methacrylate, 10.4 parts of neopentyl glycol dimethacrylate and 0.01 part of 2,6-di-t-butyl-4-methylphenol, as an acrylic monomer (A), 15.6 parts of the polymer powder (P-1) as an acrylic polymer (B), and 61 parts of aluminum hydroxide (manufactured by Sumitomo Chemical Co., Ltd., trade name "CWL-325J" ) as an inorganic filler (C) were charged into a mixer of Laboplast Mill manufactured by Toyo Seiki Seisakusho K.K., and kneaded at 40°C to measure the consumption energy per unit volume of the acrylic BMC required for kneading of 45 seconds, to find it was 60 MJ/m$^3$.

Separately, into a mixture composed of 6.5 parts of methyl methacrylate, 6.5 parts of isobornyl methacrylate, 10.4 parts of neopentyl glycol dimethacrylate and 0.01 part of 2,6-di-t-butyl-4-methylphenol, as an acrylic monomer (A), was pre-mixed and dissolved 0.6 parts of t-amyl peroxy-3,5,5-trimethyl hexanoate (manufactured by Kayaku Akuzo K.K., trade name "Kaya Ester AN" , 10 hours half life temperature = 95°C) as a curing agent, and the mixture was charged into a tank 1A, and fed continuously into a hopper 8 appended to a continuous twin screw kneading extruder 9 (S-2 type KRC kneader manufactured by Kurimoto Ltd., screw diameter = 50 mm, L/D = 13.7) by a snake pump 3A manufactured by Hyoshin Sobi K.K.

The polymer powder (P-1) was charged as an acrylic polymer (B) into an SUS vessel 5B appended to a screw feeder 6B manufactured by Kuma Engineering K.K., and fed continuously to a hopper 8 appended to the continuous twin screw kneading extruder 9.

Aluminum hydroxide (manufactured by Sumitomo Chemical Co., Ltd., trade name "CWL-325J") was charged as an inorganic filler (C) into an SUS vessel 5C appended to a screw feeder 6C manufactured by Kuma Engineering K.K., and fed continuously into the hopper 8 appended to the continuous twin screw kneading extruder 9.

Further, a heat medium temperature-controlled at 40°C was passed through a jacket of a barrel of the continuous twin screw kneading extruder 9.

The components (A), (B) and (C) were charged into a continuous twin screw kneading extruder at charging speeds of 517 g/min., 336 g/min. and 1314 g/min., respectively, so that the average remaining time of the materials in the continuous twin screw kneading extruder for an acrylic BMC was about 45 seconds.

According to the above-mentioned method, an acrylic BMC was produced continuously, and an acrylic BMC in the form of sheet having a thickness of 20 mm was obtained from a die 10 attached to the lower part of the tip of the continuous twin screw kneading extruder, at a production speed of 130 kg/h. In this operation, the production efficiency of the acrylic BMC was 0.026 kg/h · mm$^2$.

The resulted acrylic BMC in the form of sheet had been thickened even directly after discharged from the continuous twin screw kneading extruder, and it manifested excellent handling property without stickiness.

Then, 700 g of the resulted acrylic BMC was charged into a plate mold of 200 mm square, and cured under heat and pressure for 10 minutes under conditions of an upper mold temperature of 130°C, a lower mold temperature of 115°C and a pressure of 10 MPa and press-molded to obtain a plate of acrylic artificial marble having a thickness of 10 mm. The resulted artificial marble had high surface gloss and extremely excellent appearance.

[Comparative Example III-1]

Kneading was effected at 20°C using a mixer of Laboplast Mill manufactured by Toyo Seiki Seisakusho K.K., at the same composition as in Example III-1, while changing temperature and time, to measure the consumption energy per unit volume of the acrylic BMC required for kneading of 20 seconds, to find it was 0.4 MJ/m$^3$.

Separately, according to the same method as in Example III-1, components were charged into the continuous twin screw kneading extruder, and an acrylic BMC was kneaded continuously. However, the charging speed of the component (A) was changed to 1193 g/min., the charging speed of the component (B) was changed to 775.5 g/min., and the charging speed of the component (C) was changed to 3031.5 g/min. so that the average remaining time of the materials in the continuous twin screw kneading extruder was about 20 second, and the temperature of the heat medium passed through a jacket of a barrel of the continuous twin screw kneading extruder was altered to 20 °C.

According to the above-mentioned method, an acrylic BMC was kneaded continuously. However, the discharged substance from an extrusion die 10 attached to the lower part of the tip of the continuous twin screw kneading extruder was not thickened, and in the form of semi-liquid having stickiness and was not a dough.

[Example IV-1]

Into a mixture composed of 6.5 parts of methyl methacrylate, 6.5 parts of isobornyl methacrylate, 10.4 parts of neopentyl glycol dimethacrylate and 0.01 part of 2,6-di-t-butyl-4-methylphenol, as an acrylic monomer (A), was pre-mixed and dissolved 0.6 parts of t-amyl peroxy-3,5,5-trimethyl hexanoate (manufactured by Kayaku Akuzo K.K., trade name "Kaya Ester AN" , 10 hours half life temperature = 95°C) as a curing agent, and the pre-mixture was charged into a tank 1A, and fed continuously into a hopper 8 appended to a continuous twin screw kneading extruder 9 (S-2 type KRC kneader manufactured by Kurimoto Ltd., screw diameter = 50 mm, L/D = 13.7) by a snake pump 3A manufactured by Hyoshin Sobi K.K.

The polymer powder (P-1) was charged as an acrylic polymer (B) into an SUS vessel 5B appended to a screw feeder 6B manufactured by Kuma Engineering K.K., and fed continuously to a hopper 8 appended to the continuous twin screw kneading extruder 9.

Aluminum hydroxide (manufactured by Sumitomo Chemical Co., Ltd., trade name "CWL-325J") was charged as an inorganic filler (C) into an SUS vessel 5C appended to a screw feeder 6C manufactured by Kuma Engineering K.K., and fed continuously into the hopper 8 appended to the continuous twin screw kneading extruder 9.

Further, a heat medium temperature-controlled at 40°C was passed through a jacket of a barrel of the continuous twin screw kneading extruder 9.

The components (A), (B) and (C) were charged into a continuous twin screw kneading extruder at charging speeds of 517 g/min., 336 g/min. and 1314 g/min., respectively, so that the production speed of the acrylic BMC was 130 kg/h. In this operation, the average remaining time of the materials in the continuous twin'screw kneading extruder was about 45 seconds.

According to the above-mentioned method, an acrylic BMC was produced continuously, and an acrylic BMC in the form of sheet having a thickness of 20 mm was obtained from a die 10 attached to the lower part of the tip of the continuous twin screw kneading extruder, at a production speed *of* 130 kg/h. In this operation, the production efficiency of the acrylic BMC was 0.026 kg/h · mm$^2$.

The resulted acrylic BMC in the form of sheet had been thickened even directly after discharged from the continuous twin screw kneading extruder, and-it manifested excellent handling property without stickiness.

Further, separately, the constituent components (component (A) to (C)) of this acrylic BMC were charged into a mixer of Laboplast Mill manufactured by Toyo Seiki Seisakusho K.K., and kneaded at 40°C for 45 seconds, to detect a kneading torque of 39.2 N · m. In this operation, the consumption energy was 60 MJ/m$^3$.

Then, 700 g of the resulted acrylic BMC was charged into a plate mold of 200 mm square, and cured under heat and pressure for 10 minutes under conditions of an upper mold temperature of 130°C, a lower mold temperature of 115°C and a pressure of 10 MPa and press-molded to obtain a plate of acrylic artificial marble having a thickness of 10 mm. The resulted artificial marble had high surface gloss and extremely excellent appearance.

[Comparative Example IV-1]

Kneading was continuously effected by the same method as in Example IV-1 except that the components (A), (B) and (C) were charged at charging speed of 83.5 g/min., 54.3 g/min. and 212.2 g/min,., respectively, into a continuous twin screw kneading extruder, and a heat medium temperature-controlled at 20°C was passed through a jacket of a barrel of the continuous twin screw kneading extruder 9. In this operation, the average remaining time of the materials in the continuous twin screw kneading extruder was about 4 minutes.

According to the above-mentioned method, an acrylic BMC was produced continuously, and a thickened acrylic BMC in the form of sheet without stickiness was obtained from a die 10 attached to the lower part of the tip of the continuous twin screw kneading extruder. In this operation, the production efficiency of the acrylic BMC was 0.004 kg/h · mm$^2$, and the production efficiency of the acrylic BMC was as low as 21 kg/h.

Further, separately, the constituent components (component (A) to (C)) of this acrylic BMC were charged into a mixer of Laboplast Mill manufactured by Toyo Seiki Seisakusho K.K., and kneaded at 20°C for 4 minutes, to detect a kneading torque of 1 N · m. In this operation, the consumption energy was 1 MJ/m$^3$.

[Example V-1]

Into a mixture composed of 6.5 parts of methyl methacrylate (manufactured by Mitsubishi Rayon Co., Ltd., trade name "Acryester M" ), 6.5 parts of isobornyl methacrylate (manufactured by Mitsubishi Rayon Co., Ltd., trade name "Acryester IBX"), 10.4 parts of neopentyl. glycol dimethacrylate (manufactured by Shin Nakamura Kagaku K.K., trade name "NK Ester NPG" ) and 0.01 part of 2 ,6-di-t-butyl-4-methylphenol (manufactured by Sumitomo Chemical Co., Ltd., trade name "Sumilizer BHT" ), as an acrylic monomer (A), was pre-mixed and dissolved 0.6 parts of 1,1-bis (t-butyl peroxy)3,3,5-trimethylcyclohexane (manufactured by NOF Corp., trade name "Perhexa 3M" , 10 hours half life temperature = 90°C) as a curing agent (D), and the pre-mixture was charged into a tank 1A, and fed continuously into a continuous twin screw kneader 9 (S-2 type KRC kneader manufactured by Kurimoto Ltd., screw diameter = 50 mm, L/D = 13.7) at a speed of 795 g/min. through a liquid feeding tube 4A connected to the continuous twin screw kneader 9, by a snake pump 3A manufactured by Hyoshin Sobi K.K. factured by Hyoshin Sobi K.K.

The polymer powder (P-1) was charged as an acrylic polymer (B) into an SUS vessel 5B appended to a screw feeder 6B manufactured by Kuma Engineering K.K., and fed continuously to a hopper 8 appended to the continuous twin screw kneading extruder 9 at a speed of 517 g/min.

Aluminum hydroxide (manufactured by Sumitomo Chemical Co., Ltd., trade name "CWL-325J") was charged as an inorganic filler (C) into an SUS vessel 5C appended to a screw feeder 6C manufactured by Kuma Engineering K.K., and fed continuously into the hopper 8 appended to the continuous twin screw kneading extruder 9 at a speed of 2021 g/min.

By storing all of 1A, 5B and 5C in a constant temperature chamber, the temperatures of the components (A) to (D) were constantly maintained at 30°C.

Further, a heat medium temperature-controlled at 45°C was passed through a jacket of a barrel of the continuous twin screw kneading extruder 9.

According to the above-mentioned method, the components (A) to (D) were charged simultaneously into the continuous twin screw kneader at a rotation of 200 rpm (200 per minute), and an acrylic BMC in the form of sheet was produced continuously from a die 10 attached to the lower part of the tip of the continuous twin screw kneading extruder 9. The power of the kneader was 2 kW. The specific rotation speed was calculated as 1, and the specific power was calculated as 0.01. The remaining time of the materials in the continuous twin screw kneader was about 30 seconds. The extruded BMC had a temperature of 63°C and it could be extruded without problem. The acrylic BMC in the form of sheet was continuously produced under this condition. As a result, an acrylic BMC in the form of sheet was obtained stably, even when the operation was continued for 3 hours or more.

The resulted acrylic BMC in the form of sheet was a BMC manifesting excellent handling property without stickiness, even directly after discharged from the tip of the continuous twin screw kneading extruder, and had a viscosity of $10^4$ Pa · s.

This acrylic BMC was sealed with a laminate film (manufactured by Star Plastic Industry K.K., trade name "Eslap HB" ) having a three-layer structure of polyolefin/polyamide/polyolefin, having a thickness of 80 μm, and left under an atmosphere of 23°C. This acrylic BMC was not cured even three months after being left, and revealed extremely excellent storage stability,

Then, portions each having a weight of 700 g were randomly sampled at five positions from this acrylic BMC in the form of sheet. 700 g of this sampled acrylic BMC was filled in a plate mold of 200 mm square, and cured under heat and pressure for 10 minutes under conditions of an upper mold temperature of 130°C, a lower mold temperature of 115°C and a pressure of 10 MPa, to obtain five plates of acrylic artificial marble having a thickness of 10 mm. Any of the resulted five pieces of artificial marble had high surface gloss, contained no part of curing failure, and had extremely excellent appearance.

[Comparative Example V-1]

The same operation was conducted as in Example V-1 except that the rotation speed of the continuous twin screw kneader was 80 rpm. The specific ration speed was 0.4, the power measured by a power meter was'0.8 kW, and the specific power was 0.004. The fed raw materials gradually remained at a hopper port, and the remaining amount of the raw materials after one hour was about 10 kg, and continuous production of an acrylic BMC was impossible.

[Comparative Example V-2]

The same operation was conducted as in Example V-1 except that the rotation speed of the continuous twin screw kneader was 400 rpm. The specific ration speed was 2. The power measured by a power meter directly after initiation of production was 4.5 kW, and the specific power was 0.0225. The temperature of the acrylic BMC had risen to 80°C, 20 minutes after initiation of continuous production. 30 minutes after, the acrylic BMC was had been polymerized and cured in the twin screw kneader, and the rotation of the twin screw kneader stopped due to excess load.

[Example V-2]

The same operation as in Example V-1 was effected, to continuously produce an acrylic BMC in the form of sheet at a speed of 200 kg/h, excepting that 13.2 parts of methyl methacrylate, 4.1 parts of neopentyl glycol dimethacrylate and 0.5 parts of ethylene glycol dimethacrylate were used as an acrylic monomer (A) and into syrup prepared by dissolving 9.6 parts of (P-4) in Production Example (4) in the acrylic monomers (A) (27.4 parts, in total) was dissolved 0.5 parts of t-amyl peroxy benzoate (manufactured by Kayaku Akuzo K.K., trade name "KD-1") as a curing agent (D) and 0.15 parts of zinc stearate as an internal releasing agent, and the feeding speed thereof was 929 g/min, excepting that the acrylic powder (P-1) was used as an acrylic polymer (B), and the feeding speed thereof was 225 g/min., excepting that aluminum hydroxide (manufactured by Sumitomo Chemical Co., Ltd., trade name "CWL-325J" ) was fed as an inorganic filler (C) at a speed of 1543 g/min., and excepting that the pre-mixture of a white inorganic filler-containing resin particle and a black inorganic filler-containing resin particle (ratio by weight: 1:1, average particle size: 300 μm) produced in Production Example (5) was used as an inorganic filler-containing resin particle (E), charged in an SUS vessel 5E, and fed by a screw feeder 6E at a speed of 636 g/min. The continuous twin screw kneader was operated at a rotation speed of 180 rpm, and used a power of 1.8 kW. The specific rotation speed was calculated as 0.9, and the specific power was calculated as 0.009. The remaining time of the materials in the continuous twin screw kneader was about 30 seconds. The extruded BMC had a temperature of 60°C and it could be extruded without problem. The produced BMC had a viscosity of $10^4$ Pa · s and a plate of artificial marble having excellent appearance was produced by press-molding this BMC.

[Comparative Example V-3]

The same operation was conducted as in Example V-2 except that the rotation speed of the continuous twin screw kneader was 80 rpm. The specific ration speed was 0.4, the power measured by a power meter was 0.8 kW, the specific power was 0.004. The fed raw materials gradually remained at a hopper port, and the remaining amount of the raw materials after one hour was about 10 kg, and continuous production of an acrylic BMC was impossible.

[Comparative Example V-4]

The same operation was conducted as in Example V-1 except that the rotation speed of the continuous twin screw kneader was 400 rpm. The power measured by a power meter directly after initiation of production was 4.5 kW, and the specific power was 0.0225. The temperature of the acrylic BMC had risen to 75°C, 30 minutes after initiation of continuous production. 45 minutes after, the acrylic BMC was had been polymerized and cured in the twin screw kneader, and the rotation of the twin screw kneader stopped due to excess load.

Table 3

| | Acrylic monomer (A) | | | | | Acrylic polymer (B) | | Inorganic filler (C) | Curing agent (D) | | Inorganic filler-containing resin particle (E) |
|---|---|---|---|---|---|---|---|---|---|---|---|
| | MMA | IBX | NPG | ED | St | Kind | Amount | | Kind | Amount | |
| Ex.V-1 | 6.5 | 6.5 | 10.4 | – | – | P-1 | 15.6 | 61 | Perhaxa 3M | 0.6 | – |
| Ex.V-2 | 13.2 | – | 4.1 | 0.5 | – | P-1 P-4 | 6.8 9.6 | 46.6 | KD-1 | 0.5 | 19.2 |

Abbreviations in Table 3 are shown below.
MMA:methyl methacrylate, IBX:isobornyl methacrylate,
NPG:neopentyl glycol dimethacrylate, EDMA:ethylene glycol dimethacrylate,
Perhexa 3M:1,1-bis(t-butyl peroxy)3,3,5-trimethylcyclohexane,
KD-1:t-amyl peroxy benzoate

EP 1 197 523 A1

[Example VI-1]

A mixture composed of 6.5 parts of methyl methacrylate (manufactured by Mitsubishi Rayon Co., Ltd., trade name "Acryester M" ), 6.5 parts of isobornyl methacrylate (manufactured by Mitsubishi Rayon Co., Ltd., trade name "Acryester IBX" ), 10.4 parts of neopentyl glycol dimethacrylate (manufactured by Shin Nakamura Kagaku K.K., trade name "NK Ester NPG" ), 0.01 part of 2,6-di-t-butyl-4-methylphenol (manufactured by Sumitomo Chemical Co., Ltd., trade name "Sumilizer BHT" ) and 5.5 parts of a pigment (COLORTEX GREEN#402, manufactured by Sanyo Shikiso K.K.), as an acrylic monomer (A), was charged into a tank, and fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed manifested precision in (42.2±0.80)g/5 seconds.
The polymer powder (P-1) was charged as an acrylic polymer (B) into an SUS vessel appended to a screw feeder manufactured by Kuma Engineering K.K., and fed continuously to a hopper appended to the continuous twin screw kneader. The feeding speed manifested precision in (22.8 ±1.5)g/5 seconds.
Aluminum hydroxide (manufactured by Sumitomo Chemical Co., Ltd., trade name "CWL-325J" ) was charged as an inorganic filler (C) into an SUS vessel appended to a screw feeder manufactured by Kuma Engineering K.K., and fed continuously into a hopper appended to the continuous twin screw kneader. The feeding speed manifested precision in (89±6)g/5 seconds.
1,1-bis(t-butyl peroxy)3,3,5-trimethylcyclohexane (manufactured by NOF Corp., trade name "Perhexa 3M" , 10 hours half life temperature = 90°C) as a curing agent was charged into a tank, and fed continuously into a hopper appended to the continuous twin screw kneader by a snake pump manufactured by Hyoshin Sobi K.K. The feeding speed manifested precision in (0.88±0.06)g/5 seconds.
Further, a heat medium temperature-controlled at 45°C was passed through a jacket of a barrel of the continuous twin screw kneader.
According to the above-mentioned method, the components (A) to (C) and curing agent were charged simultaneously into the continuous twin screw kneader, and kneading and thickening were conducted in one process in the continuous twin screw kneader, and an acrylic BMC was produced continuously by the continuous twin screw kneader at a speed of 112 kg/h over about 4 hours. The remaining time of the materials in the continuous twin screw kneader was about 2 minutes. The resulted acrylic BMC in the form of sheet was a BMC manifesting excellent handling property without stickiness, even directly after discharged from the tip of the continuous twin screw kneader.
Then, portions each having a weight of 700 g were randomly sampled at five positions from this acrylic BMC in the form of sheet. 700 g of this sampled acrylic BMC was filled in a plate mold of 200 mm square, and cured under heat and pressure for 10 minutes under conditions of an upper mold temperature of 130°C, a lower mold temperature of 115°C and a pressure of 10 MPa, to obtain five plates of acrylic artificial marble having a thickness of 10 mm.
In each of these five plates, the maximum difference among chrominances ΔE* of five measuring points, four corner points and the center point (hereinafter, described as ΔE*MAX) was measured using a chrominance meter (HANDY CORORIMETER NR-3000 manufactured by NIPPON DEN-SHOKU). The average value of L* of these plates was 32, and when ΔE*MAX was compared between the five plates, the maximum value of ΔE*MAX was 0.46. Chrominance could not be recognized visually on these plates. (details are described in Table VI-1)

[Example VI-2]

The acrylic monomer (A) used in Example VI-1 was fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed manifested precision in (42.2±0.79)g/5 seconds.
The acrylic polymer (B) used in Example VI-1 was fed continuously to a hopper appended to the continuous twin screw kneader by a screw feeder manufactured by Kuma Engineering K.K. Here, a stainless 4 mesh wire having a diameter of 0.8 mm had been mounted on the tip of a feeding piping appended to the screw feeder. The feeding speed manifested precision in (22.8±1.1)g/5 seconds.
The inorganic filler (C) used in Example VI-1 was fed continuously into a hopper appended to the continuous twin screw kneader by a screw feeder manufactured by Kuma Engineering K.K. Here, a stainless 4 mesh wire having a diameter of 0.8 mm had been mounted on the tip of a feeding piping appended to the screw feeder. The feeding speed manifested precision in (89±5.1)g/5 seconds.
The curing agent used in Example VI-1 was fed continuously into a hopper appended to the continuous twin screw kneader by a snake pump manufactured by Hyoshin Sobi K.K. The feeding speed manifested precision in (0.88±0.05)g/5 seconds.
Further, a heat medium temperature-controlled at 45°C was passed through a jacket of a barrel of the continuous twin screw kneader.
According to the above-mentioned method, the components (A) to (C) and curing agent were charged simultaneously into the continuous twin screw kneader, and kneading and thickening were conducted in one process in the continuous twin screw kneader, and an acrylic BMC was produced continuously by the continuous twin screw kneader at a speed of 112 kg/h over about 4 hours. The remaining time of the materials in the continuous twin screw kneader was about 2 minutes.

The resulted acrylic BMC in the form of sheet was a BMC manifesting excellent handling property without stickiness, even directly after discharged from the tip of the continuous twin screw kneader.

Then, five plates of acrylic artificial marble were obtained in the same manner as in Example VI-1, from this acrylic BMC in the form of sheet.

In each of these five plates, color measurement was effected in the same manner as in Example VI-1. The average value of L* of these plates was 32, and the maximum value of ΔE*MAX was 0.38. Chrominance could not be recognized visually on these plates. (details are described in Table VI-2)

[Example VI-3]

The acrylic monomer (A) used in Example VI-1 was fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed manifested precision in (42.2±0.80)g/5 seconds.

The acrylic polymer (B) used in Example VI-1 was fed onto a vibration plate of a vibration feeder manufactured by Shinko Electric Co., Ltd. (type: DRVF-300-1.5), then, continuously to a hopper appended to the continuous twin screw kneader from the vibration plate. Here, a stainless 4 mesh wire having a diameter of 0.8 mm had been mounted on the tip of a feeding piping appended to the screw feeder. The feeding speed manifested precision in (22.8±0.6)g/5 seconds.

The inorganic filler (C) used in Example VI-1 was fed onto a vibration plate of a vibration feeder manufactured by Shinko Electric Co., Ltd. (type: DRVF-300-1.5), then, continuously to a hopper appended to the continuous twin screw kneader from the vibration plate. Here, a stainless 4 mesh wire having a diameter of 0.8 mm had been mounted on the tip of a feeding piping appended to the screw feeder. The feeding speed manifested precision in (89±2.5)g/5 seconds

The curing agent used in Example VI-1 was fed continuously into a hopper appended to the continuous twin screw kneader by a snake pump manufactured by Hyoshin Sobi K.K. The feeding speed manifested precision in (0.88±0.06)g/5 seconds.

Further, a heat medium temperature-controlled at 45°C was passed through a jacket of a barrel of the continuous twin screw kneader.

According to the above-mentioned method, the components (A) to (C) and curing agent were charged simultaneously into the continuous twin screw kneader, and kneading and thickening were conducted in one process in the continuous twin screw kneader, and an acrylic BMC was produced continuously by the continuous twin screw kneader at a speed of 112 kg/h over about 4 hours. The remaining time of the materials in the continuous twin screw kneader was about 2 minutes.

The resulted acrylic BMC in the form of sheet was a BMC manifesting excellent handling property without stickiness, even directly after discharged from the tip of the continuous twin screw kneader.

Then, five plates of acrylic artificial marble were obtained in the same manner as in Example VI-1, from this acrylic BMC in the form of sheet.

In each of these five plates, color measurement was effected in the same manner as in Example VI-1. The average value of L* of these plates was 32, and the maximum value of ΔE*MAX was 0.22. Chrominance could not be recognized visually on these plates. (details are described in Table VI-3)

[Example VI-4]

The acrylic monomer (A) used in Example VI-1 was fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed manifested precision in (42.2±0.77)g/5 seconds.

The acrylic polymer (B) used in Example VI-1 was fed to a hopper appended to the continuous twin screw kneader by a vibration feeder manufactured by Shinko Electric Co., Ltd. (type: DRVF-300-1.5). The feeding speed manifested precision in (22.8±1.3)g/5 seconds.

The inorganic filler (C) used in Example VI-1 was fed to a hopper appended to the continuous twin screw kneader by a vibration feeder manufactured by Shinko Electric Co., Ltd. (type: DRVF-300-1.5). The feeding speed manifested precision in (89±5.8)g/5 seconds.

The curing agent used in Example VI-1 was fed continuously into a hopper appended to the continuous twin screw kneader by a snake pump manufactured by Hyoshin Sobi K.K. The feeding speed manifested precision in (0.88±0.05)g/5 seconds.

Further, a heat medium temperature-controlled at 45°C was passed through a jacket of a barrel of the continuous twin screw kneader.

According to the above-mentioned method, the components (A) to (C) and curing agent were charged simultaneously into the continuous twin screw kneader, and kneading and thickening were conducted in one process in the continuous twin screw kneader, and an acrylic BMC was produced continuously by the continuous twin screw kneader at a speed of 112 kg/h over about 4 hours. The remaining time of the materials in the continuous twin screw kneader was about 2 minutes.

The resulted acrylic BMC in the form of sheet was a BMC manifesting excellent handling property without stickiness, even directly after discharged from the tip of the continuous twin screw kneader.

Then, five plates of acrylic artificial marble were obtained in the same manner as in Example VI-1, from this acrylic BMC in the form of sheet.

In each of these five plates, color measurement was effected in the same manner as in Example VI-1. The average value of L* of these plates was 32, and the maximum value of ΔE*MAX was 0.44. Chrominance could not be recognized visually on these plates. (details are described in Table VI-4)

[Example VI-5]

The acrylic monomer (A) used in Example VI-1 was fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed manifested precision in (42.2±0.79)g/5 seconds.

The acrylic polymer (B) used in Example VI-1 was fed to a hopper appended to the continuous twin screw kneader by a belt feeder manufactured by Kuma Engineering K.K. The feeding speed manifested precision in (22.8±1.4) g/5 seconds.

The inorganic filler (C) used in Example VI-1 was fed to a hopper appended to the continuous twin screw kneader by a belt feeder manufactured by Kuma Engineering K.K. The feeding speed manifested precision in (89±5.7) g/5 seconds.

The curing agent used in Example VI-1 was fed continuously into a hopper appended to the continuous twin screw kneader by a snake pump manufactured by Hyoshin Sobi K.K. The feeding speed manifested precision in (0.88±0.06)g/5 seconds.

Further, a heat medium temperature-controlled at 45°C was passed through a jacket of a barrel of the continuous twin screw kneader.

According to the. above-mentioned method, the components (A) to (C) and curing agent were charged simultaneously into the continuous twin screw kneader, and kneading and thickening were conducted in one process in the continuous twin screw kneader, and an acrylic BMC was produced continuously by the continuous twin screw kneader at a speed of 112 kg/h over about 4 hours. The remaining time of the materials in the continuous twin screw kneader was about 2 minutes.

The resulted acrylic BMC in the form of sheet was a BMC manifesting excellent handling property without stickiness, even directly after discharged from the tip of the continuous twin screw kneader.

Then, five plates of acrylic artificial marble were obtained in the same manner as in Example VI-1, from this acrylic BMC in the form of sheet.

In each of these five plates, color measurement was effected in the same manner as in Example VI-1. The average value of L* of these plates was 32, and the maximum value of ΔE*MAX was 0.43. Chrominance could not be recognized visually on these plates. (details are described in Table VI-5)

[Example VI-6]

The acrylic monomer (A) used in Example VI-1 was fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed manifested precision in (42.2±0.81)g/5 seconds.

The acrylic polymer (B) used in Example VI-1 was fed onto a vibration plate of a vibration feeder manufactured by Shinko Electric Co., Ltd. (type: DRVF-300-1.5) by a belt feeder manufactured by Kuma Engineering K.K., then, continuously to a hopper appended to the continuous twin screw kneader from the vibration plate. The feeding speed manifested precision in (22.8±1.0)g/5 seconds.

The inorganic filler (C) used in Example VI-1 was fed onto a vibration plate of a vibration feeder manufactured by Shinko Electric Co., Ltd. (type: DRVF-300-1.5) by a belt feeder manufactured by Kuma Engineering K.K., then, continuously to a hopper appended to the continuous twin screw kneader from the vibration plate. The feeding speed manifested precision in (89±3.7)g/5 seconds.

The curing agent used in Example VI-1 was fed continuously into a hopper appended to the continuous twin screw kneader by a snake pump manufactured by Hyoshin Sobi K.K. The feeding speed manifested precision in (0.88±0.05)g/5 seconds.

Further, a heat medium temperature-controlled at 45°C was passed through a jacket of a barrel of the continuous twin screw kneader.

According to the above-mentioned method, the components (A) to (C) and curing agent were charged simultaneously into the continuous twin screw kneader, and kneading and thickening were conducted in one process in the continuous twin screw kneader, and an acrylic BMC was produced continuously by the continuous twin screw kneader at a speed of 112 kg/h over about 4 hours. The remaining time of the materials in the continuous twin screw kneader was about 2 minutes.

The resulted acrylic BMC in the form of sheet was a BMC manifesting excellent handling property without stickiness, even directly after discharged from the tip of the continuous twin screw kneader.

Then, five plates of acrylic artificial marble were obtained in the same manner as in Example VI-1, from this acrylic BMC in the form of sheet.

In each of these five plates, color measurement was effected in the same manner as in Example VI-1. The average value of L* of these plates was 32, and the maximum value of ΔE*MAX was 0.31. Chrominance could not be recognized visually on these plates. (details are described in Table VI-6)

[Example VI-7]

The acrylic monomer (A) used in Example VI-1 was fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed manifested precision in (42.2±0.78)g/5 seconds.

The acrylic polymer (B) used in Example VI-1 was fed continuously to a hopper appended to the continuous twin screw kneader by a circle feeder manufactured by Akatake Engineering K.K. (type: Hi-300). The feeding speed manifested precision in (22.8±1.1)g/5 seconds.

The inorganic filler (C) used in Example VI-1 was fed continuously to a hopper appended to the continuous twin screw kneader by a circle feeder manufactured by Akatake Engineering K.K. (type: Hi-300). The feeding speed manifested precision in (89±5.0)g/5 seconds.

The curing agent used in Example VI-1 was fed continuously into a hopper appended to the continuous twin screw kneader by a snake pump manufactured by Hyoshin Sobi K.K. The feeding speed manifested precision in (0.88±0.06)g/5 seconds.

Further, a heat medium temperature-controlled at 45°C was passed through a jacket of a barrel of the continuous twin screw kneader.

According to the above-mentioned method, the components (A) to (C) and curing agent were charged simultaneously into the continuous twin screw kneader, and kneading and thickening were conducted in one process in the continuous twin screw kneader, and an acrylic BMC was produced continuously by the continuous twin screw kneader at a speed of 112 kg/h over about 4 hours. The remaining time of the materials in the continuous twin screw kneader was about 2 minutes.

The resulted acrylic BMC in the form of sheet was a BMC manifesting excellent handling property without stickiness, even directly after discharged from the tip of the continuous twin screw kneader.

Then, five plates of acrylic artificial marble were obtained in the same manner as in Example VI-1, from this acrylic BMC in the form of sheet.

In each of these five plates, color measurement was effected in the same manner as in Example VI-1. The average value of L* of these plates was 32, and the maximum value of ΔE*MAX was 0.37. Chrominance could not be recognized visually on these plates. (details are described in Table VI-7)

[Comparative Example VI-1]

The acrylic monomer (A) used in Example VI-1 was fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed manifested precision in (8.35±0.16)g/5 seconds.

The acrylic polymer (B) used in Example VI-1 was charged into an SUS vessel appended to a screw feeder manufactured by Kuma Engineering K.K., and fed continuously to a hopper appended to the continuous twin screw kneader. The feeding speed manifested precision in (4.51±0.37)g/5 seconds.

The inorganic filler (C) used in Example VI-1 was charged into an SUS vessel appended to a screw feeder manufactured by Kuma Engineering K.K., and fed continuously to a hopper appended to the continuous twin screw kneader. The feeding speed manifested precision in (17.6±1.4)g/5 seconds.

The curing agent used in Example VI-1 was fed continuously into a hopper appended to the continuous twin screw kneader by a snake pump manufactured by Hyoshin Sobi K.K. The feeding speed manifested precision in $(0.17\pm0.003)$g/5 seconds.

Further, a heat medium temperature-controlled at 45°C was passed through a jacket of a barrel of the continuous twin screw kneader.

According to the above-mentioned method, the components (A) to (C) and curing agent were charged simultaneously into the continuous twin screw kneader, and kneading and thickening were conducted in one process in the continuous twin screw kneader, and an acrylic BMC was produced continuously by the continuous twin screw kneader at a speed of 22 kg/h over about 4 hours. The remaining time of the materials in the continuous twin screw kneader was about 2 minutes.

The resulted acrylic BMC in the form of sheet was a BMC manifesting excellent handling property without stickiness, even directly after discharged from the tip of the continuous twin screw kneader.

Then, five plates of acrylic artificial marble were obtained in the same manner as in Example VI-1, from this acrylic BMC in the form of sheet.

In each of these five plates, color measurement was effected in the same manner as in Example VI-1. The average value of L* of these plates was 32, and the maximum value of $\Delta E^*MAX$ was 4.10. Chrominance was recognized visually on these plates. (details are described in Table VI-8)

Table VI-1

| Sample NO. | 1 | 2 | 3 | 4 | 5 |
|---|---|---|---|---|---|
| $\Delta E^*MAX$ | 0.42 | 0.39 | 0.46 | 0.41 | 0.40 |

Table VI-2

| Sample NO. | 1 | 2 3 | 4 | 5 |
|---|---|---|---|---|
| $\Delta E^*MAX$ | 0.38 | 0.35 0.37 | 0.34 | 0.37 |

Table VI-3

| Sample NO. | 1 | 2 | 3 | 4 | 5 |
|---|---|---|---|---|---|
| $\Delta E^*MAX$ | 0.21 | 0.22 | 0.19 | 0.18 | 0.20 |

Table VI-4

| Sample NO. | 1 | 2 | 3 | 4 | 5 |
|---|---|---|---|---|---|
| $\Delta E^*MAX$ | 0.44 | 0.42 | 0.43 | 0.40 | 0.41 |

Table VI-5

| Sample NO. | 1 | 2 | 3 | 4 | 5 |
|---|---|---|---|---|---|
| $\Delta E^*MAX$ | 0.41 | 0.40 | 0.43 | 0.39 | 0.42 |

Table VI-6

| Sample NO. | 1 | 2 | 3 | 4 | 5 |
|---|---|---|---|---|---|
| $\Delta E^*MAX$ | 0.29 | 0.31 | 0.30 | 0.28 | 0.29 |

Table VI-7

| Sample NO. | 1 | 2 | 3 | 4 | 5 |
|---|---|---|---|---|---|
| $\Delta E^*MAX$ | 0.34 | 0.37 | 0.36 | 0.37 | 0.35 |

Table VI-8

| Sample NO. | 1 | 2 | 3 | 4 | 5 |
|---|---|---|---|---|---|
| ΔE*MAX | 0.64 | 4.10 | 0.70 | 0.60 | 0.65 |

[Example VII-1]

A mixture composed of 6.5 parts of methyl methacrylate (manufactured by Mitsubishi Rayon Co., Ltd., trade name "Acryester M" ), 6.5 parts of isobornyl methacrylate (manufactured by Mitsubishi Rayon Co., Ltd., trade name "Acryester IBX" ), 10.4 parts of neopentyl glycol dimethacrylate (manufactured by Shin Nakamura Kagaku K.K., trade name "NK Ester NPG" ) and 0.01 part of 2,6-di-t-butyl-4-methylphenol (manufactured by Sumitomo Chemical Co., Ltd., trade name "Sumilizer BHT" ), as an acrylic monomer (A), was charged into a tank 1A, and fed continuously into a hopper 8 appended to a continuous twin screw kneader 9 (S-2 type KRC kneader manufactured by Kurimoto Ltd., screw diameter = 50 mm, L/D = 13.7) at a speed of 410 g/min. by a snake pump 3A manufactured by Hyoshin Sobi K.K.

The polymer powder (P-1) was charged as an acrylic polymer (B) into an SUS vessel 5B appended to a screw feeder 6B manufactured by Kuma Engineering K.K., and fed continuously to the hopper 8 appended to the continuous twin screw kneader 9 at a speed of 273 g/min.

Aluminum hydroxide (manufactured by Sumitomo Chemical Co., Ltd., trade name "CWL-325J" ) was charged as an inorganic filler (C) into an SUS vessel 5C appended to a screw feeder 6C manufactured by Kuma Engineering K.K., and fed continuously into the hopper 8 appended to the continuous twin screw kneader 9 at a speed of 1068 g/min.

1,1-bis(t-butyl peroxy)3,3,5-trimethylcyclohexane (manufactured by NOF Corp., trade name "Perhexa 3M" , 10 hours half life temperature = 90°C) as a curing agent (D) was charged into a tank 1D, and fed continuously into the hopper 8 appended to the continuous twin screw kneader 9 by a snake pump manufactured by Hyoshin Sobi K.K., at a speed of 10.5 g/min.

Further, a heat medium temperature-controlled at 45°C was passed through a jacket of a barrel of the continuous twin screw kneader 9.

According to the above-mentioned method, the components (A) to (C) and curing agent were charged simultaneously into the continuous twin screw kneader, and kneading and thickening were conducted in one process in the continuous twin screw kneader, and an acrylic BMC in the form of sheet was produced continuously from a die 10 attached to the lower part of the tip of the continuous twin screw kneader 9 at a speed of 105 kg/h. The remaining time of the materials in the continuous twin screw kneader was about 2 minutes. The extruded BMC had a temperature of 60°C, and could be extruded without problem.

An acrylic BMC in the form of sheet was continuously produced under this condition. This acrylic BMC in the form of sheet was obtained stably even when the operation was continued for 3 hours or more.

The resulted acrylic BMC in the form of sheet was a BMC manifesting excellent handling property without stickiness, even directly after discharged from the tip of the continuous twin screw kneader.

This acrylic BMC was sealed with a laminate film (manufactured by Star Plastic Industry K.K., trade name "Eslap HB" ) having a three-layer structure of polyolefin/polyamide/polyolefin, having a thickness of 80 µm, and left under an atmosphere of 23°C. This acrylic BMC was not cured even three months after being left, and revealed extremely excellent storage stability.

Then, portions each having a weight of 700 g were randomly sampled at five positions from this acrylic BMC in the form of sheet. 700 g of this sampled acrylic BMC was filled in a plate mold of 200 mm square, and cured under heat and pressure for 10 minutes under conditions of an upper mold temperature of 130°C, a lower mold temperature of 115°C and a pressure of 10 MPa, to obtain five plates of acrylic artificial marble having a thickness of 10 mm. Any of the five resulted artificial marble manifested high surface gloss, had no part of curing failure at all and had extremely excellent appearance.

[Example VII-2]

Into a mixture composed of 6.5 parts of methyl methacrylate, 6.5 parts of isobornyl methacrylate, 10.4 parts of neopentyl glycol dimethacrylate and 0.01 part of 2,6-di-t-butyl-4-methylphenol, as an acrylic monomer (A), was pre-mixed and dissolved 0.6 parts of t-amyl peroxy-3,5,5-trimethyl hexanoate (manufactured by Kayaku Akuzo K.K., trade name "Kaya Ester AN" , 10 hours half life temperature = 95°C) as a curing agent (D), and the pre-mixture was charged into a tank 1A, and fed continuously into a hopper 8 appended to a continuous twin screw kneader 9 (S-2 type KRC kneader manufactured by Kurimoto Ltd., screw diameter = 50 mm, L/D = 13.7) by a snake pump 3A manufactured by Hyoshin Sobi K.K., at a speed of 600 g/min.

The polymer powder (P-2) was charged as an acrylic polymer (B) into an SUS vessel 5B appended to a screw feeder 6B manufactured by Kuma Engineering K:K., and fed continuously to the hopper 8 appended to the continuous twin screw kneading extruder 9 at a speed of 390 g/min.

Aluminum hydroxide was charged as an inorganic filler (C) into an SUS vessel 5C appended to a screw feeder 6C manufactured by Kuma Engineering K.K., and fed continuously into the hopper 8 appended to the continuous twin screw kneading extruder 9, at a speed of 1.525 g/min.

Further, a heat medium temperature-controlled at 55°C was passed through a jacket of a barrel of the continuous twin screw kneading extruder 9.

According to the above-mentioned method, the components (A) to (D) were charged into the continuous twin screw kneader, and kneading and thickening were conducted in one process in the continuous twin screw kneader, and an acrylic BMC in the form of sheet was produced continuously from a die 10 attached to the lower part of the tip of the continuous twin screw kneader 9 at a speed of 150 kg/h. The remaining time of the materials in the continuous twin screw kneader was about 1 minute. The extruded BMC had a temperature of 51°C, and could be extruded without problem.

An acrylic BMC in the form of sheet was continuously produced under this condition. This acrylic BMC in the form of sheet was obtained stably even when the operation was continued for 3 hours or more.

The resulted acrylic BMC in the form of sheet was a BMC manifesting excellent handling property without stickiness, even directly after discharged from the tip of the continuous twin screw kneader.

This acrylic BMC was left under the same condition as in Example VII-1, however, it was not cured even after three months or more, namely, the storage stability thereof was extremely excellent.

Then this acrylic BMC was sampled by the same methods as in Example VII-1, and press-molded, to obtain five plates of acrylic artificial marble having a thickness of 10 mm. Any of the five resulted artificial marble manifested high surface gloss, had no part of curing failure at all and had extremely excellent appearance.

[Example VII-3]

Into a mixture composed of 7 parts of methyl methacrylate, 4.5 parts of isobornyl methacrylate, 13 parts of neopentyl glycol dimethacrylate and 0.01 part of 2,6-di-t-butyl-4-methylphenol, as an acrylic monomer (A), was pre-mixed 1.5 parts of the polymer powder (P-1), they were dissolved by stirring at room temperature for 5 minutes, to obtain acrylic syrup having a viscosity at 20°C of 1000 mPa · s. Into 26 parts of this acrylic syrup, was pre-mixed and dissolved 0.6 parts of t-amyl peroxy benzoate (manufactured by Kayaku Akuzo K.K., trade name "KD-1 ", 10 hours half life temperature = 100°C) as a curing agent (D), and the pre-mixture was charged into a tank 1A, and fed continuously into a hopper 8 appended to a continuous twin screw kneader 9 (S-2 type KRC kneader manufactured by Kurimoto Ltd., screw diameter = 50 mm, L/D = 13.7) by a snake pump 3A manufactured by Hyoshin Sobi K.K., at a speed of 465.5 g/min.

The polymer powder (P-1) was charged as an acrylic polymer (B) into an SUS vessel 5B appended to a screw feeder 6B manufactured by Kuma Engineering K.K., and fed continuously to the hopper 8 appended to the continuous twin screw kneading extruder 9 at a speed of 227.5 g/min.

Aluminum hydroxide was charged as an inorganic filler (C) into an SUS vessel 5C appended to a screw feeder 6C manufactured by Kuma Engineering K.K., and fed continuously into the hopper 8 appended to the continuous twin screw kneading extruder 9, at a speed of 945 g/min.

A mixture of a white inorganic filler-containing resin particle and a black inorganic filler-containing resin particle (weight ratio, 1:1) produced in Production Example (5) as an inorganic filler-containing resin particle (E) was charged into an SUS vessel 5E appended to a screw feeder 6E manufactured by Kuma Engineering, and fed continuously to the hopper 8 appended to the continuous twin screw kneader 8 at a speed of 122.5 g/min.

Further, a heat medium temperature-controlled at 45°C was passed through a jacket of a barrel of the continuous twin screw kneading extruder 9.

According to the above-mentioned method, the components (A) to (E) were charged into the continuous twin screw kneader, and kneading and thickening were conducted in one process in the continuous twin screw kneader, and an acrylic BMC in the form of sheet was produced continuously from a die 10 attached to the lower part of the tip of the continuous twin screw kneader 9 at a speed of 105 kg/h. The remaining time of the materials in the continuous twin screw kneader was about 2 minutes. The extruded BMC had a temperature of 52°C, and could be extruded without problem.

An acrylic BMC in the form of sheet was continuously produced under this condition. This acrylic BMC in the form of sheet was obtained stably even when the operation was continued for 3 hours or more.

The resulted acrylic BMC in the form of sheet was a BMC manifesting excellent handling property without stickiness, even directly after discharged from the tip of the continuous twin screw kneader.

This acrylic BMC was left under the same condition as in Example VII-1, however, it was not cured even after three months or more, namely, the storage stability thereof was extremely excellent.

Then this acrylic BMC was sampled by the same methods as in Example VII-1, and press-molded (molding temperature of an upper mold was changed to 135°C, and molding temperature of a lower mold was changed to 120°C), to obtain five plates of granite-like acrylic artificial marble having a thickness of 10 mm. Any of the five resulted granite-like artificial marble manifested high surface gloss, had no part of curing failure at all and had extremely excellent appearance.

[Example VII-4]

A mixture composed of 6 parts of methyl methacrylate, 4 parts of isobornyl methacrylate, 12 parts of neopentyl glycol dimethacrylate and 0.01 part of 2,6-di-t-butyl-4-methylphenol, as an acrylic monomer (A), was charged into a tank 1A, and fed continuously into a hopper 8 appended to a continuous twin screw kneader 9 (S-2 type KRC kneader manufactured by Kurimoto Ltd., screw diameter = 50 mm, L/D = 13.7) by a snake pump 3A manufactured by Hyoshin Sobi K.K., at a speed of 660 g/min.

The polymer powder (P-3) was charged as an acrylic polymer (B) into an SUS vessel 5B appended to a screw feeder 6B manufactured by Kuma Engineering K.K., and fed continuously to the hopper 8 appended to the continuous twin screw kneading extruder 9 at a speed of 360 g/min.

Aluminum hydroxide was charged as an inorganic filler (C) into an SUS vessel 5C appended to a screw feeder 6C manufactured by Kuma Engineering K.K., and fed continuously into the hopper 8 appended to the continuous twin screw kneading extruder 9, at a speed of 1380 g/min.

t-butyl peroxy benzoate (manufactured by NOF Corp., trade name "Perbutyl Z" , 10 hours half life temperature = 104°C) as a curing agent (D) was charged into a tank 1D, and fed continuously into the hopper 8 appended to the continuous twin screw kneader 9 by a snake pump 3D manufactured by Hyoshin Sobi K.K., at a speed of 18 g/min.

A mixture of a white inorganic filler-containing resin particle and a black inorganic filler-containing resin particle (weight ratio, 1:1) produced in Production Example (5) as an inorganic filler-containing resin particle (E) was charged into an SUS vessel 5E appended to a screw feeder 6E manufactured by Kuma Engineering, and fed continuously to the hopper 8 appended to the continuous twin screw kneader 8 at a speed of 600 g/min.

Further, a heat medium temperature-controlled at 60°C was passed through a jacket of a barrel of the continuous twin screw kneading extruder 9.

According to the above-mentioned method, the components (A) to (E) were charged into the continuous twin screw kneader, and kneading and thickening were conducted in one process in the continuous twin screw kneader, and an acrylic BMC in the form of sheet was produced continuously from a die 10 attached to the lower part of the tip of the continuous twin screw kneader 9 at a speed of 180 kg/h. The remaining time of the materials in the continuous twin screw kneader was about 40 seconds. The extruded BMC had a temperature of 55°C, and could be extruded without problem.

An acrylic BMC in the form of sheet was continuously produced under this condition. This acrylic BMC in the form of sheet was obtained stably even when the operation was continued for 3 hours or more.

The resulted acrylic BMC in the form of sheet was a BMC manifesting excellent handling property without stickiness, even directly after discharged from the tip of the continuous twin screw kneader.

This acrylic BMC was left under the same condition as in Example VII-1, however, it was not cured even after three months or more, namely, the storage stability thereof was extremely excellent.

Then this acrylic BMC was sampled by the same methods as in Example VII-1, and press-molded (molding temperature of an upper mold was changed to 135°C, and molding temperature of a lower mold was changed to 120°C), to obtain five plates of granite-like acrylic artificial marble having a thickness of 10 mm. Any of the five resulted granite-like artificial marble manifested high surface gloss, had no part of curing failure at all and had extremely excellent appearance.

[Example VII-5]

Into a mixture composed of 5.5 parts of methyl methacrylate, 4 parts of isobornyl methacrylate, 11 parts of neopentyl glycol dimethacrylate and 0.01 part of 2,6-di-t-butyl-4-methylphenol, as an acrylic monomer (A), was premixed 4.5 parts of the polymer powder (P-4), they were dissolved by stirring at 60°C for 30 minutes, to obtain acrylic syrup having a viscosity at 20°C of 5000 mPa · s. Into 25 parts of this acrylic syrup, was pre-mixed and dissolved 0.6 parts of t-butyl peroxy-3,5,5-trimethylhexanoate (manufactured by Kayaku Akuzo K.K., trade name "Trigonox 42" , 10 hours half life temperature = 100°C) as a curing agent (D), and the pre-mixture was charged into a tank 1A, and fed continuously into a hopper 8 appended to a continuous twin screw kneader 9 (S-2 type KRC kneader manufactured by Kurimoto Ltd., screw diameter = 50 mm, L/D = 13.7) by a snake pump 3A manufactured by Hyoshin Sobi K.K., at a speed of 750 g/min.

The polymer powder (P-1) was charged as an acrylic polymer (B) into an SUS vessel 5B appended to a screw feeder 6B manufactured by Kuma Engineering K.K., and fed continuously to the hopper 8 appended to the continuous twin screw kneading extruder 9 at a speed of 270 g/min.

Aluminum hydroxide was charged as an inorganic filler (C) into an SUS vessel 5C appended to a screw feeder 6C manufactured by Kuma Engineering K.K., and fed continuously into the hopper 8 appended to the continuous twin screw kneading extruder 9, at a speed of 1380 g/min.

A mixture of a white inorganic filler-containing resin particle and a black inorganic filler-containing resin particle (weight ratio, 1:1) produced in Production Example (5) as an inorganic filler-containing resin particle (E) was charged into an SUS vessel 5E appended to a screw feeder 6E manufactured by Kuma Engineering, and fed continuously to the hopper 8 appended to the continuous twin screw kneader 8 at a speed of 600 g/min.

Further, a heat medium temperature-controlled at 45°C was passed through a jacket of a barrel of the continuous twin screw kneading extruder 9.

According to the above-mentioned method, the components (A) to (E) were charged into the continuous twin screw kneader, and kneading and thickening were conducted in one process in the continuous twin screw kneader, and an acrylic BMC in the form of sheet was produced continuously from a die 10 attached to the lower part of the tip of the continuous twin screw kneader 9 at a speed of 180 kg/h. The remaining time of the materials in the continuous twin screw kneader was about 40 seconds. The extruded BMC had a temperature of 62°C, and could be extruded without problem.

An acrylic BMC in the form of sheet was continuously produced under this condition. This acrylic BMC in the form of sheet was obtained stably even when the operation was continued for 3 hours or more.

The resulted acrylic BMC in the form of sheet was a BMC manifesting excellent handling property without stickiness, even directly after discharged from the tip of the continuous twin screw kneader.

This acrylic BMC was left under the same condition as in Example VII-1, however, it was not cured even after three months or more, namely, the storage stability thereof was extremely excellent.

Then this acrylic BMC was sampled by the same methods as in Example VII-1, and press-molded (molding temperature of an upper mold was changed to 135°C, and molding temperature of a lower mold was changed to 120°C), to obtain five plates of granite-like acrylic artificial marble having a thickness of 10 mm. Any of the five resulted granite-like artificial marble manifested high surface gloss, had no part of curing failure at all and had extremely excellent appearance.

[Comparative Example VII-1]

A mixture composed of 10.8 parts of methyl methacrylate and 8.2 parts of neopentyl glycol dimethacrylate, as an acrylic monomer (A), was charged into a tank 1A, and fed continuously into a hopper 8 appended to a continuous twin screw kneader 9 (S-2 type KRC kneader manufactured by Kurimoto Ltd., screw diameter = 50 mm, L/D = 13.7) by a snake pump 3A manufactured by Hyoshin Sobi K.K., at a speed of 166.5 g/min.

20 parts of the polymer powder (P-4) as an acrylic polymer (B), 52 parts of aluminum hydroxide as an inorganic filler (C), and 9 parts of a mixture of a white inorganic filler-containing resin particle and a black inorganic filler-containing resin particle (weight ratio, 1:1) produced in Production Example (5) as an inorganic filler-containing resin particle (E) were pre-mixed, and the pre-mixture was charged into an SUS vessel 5B appended to a screw feeder 6B manufactured by Kuma Engineering, and fed continuously to the hopper 8 appended to the continuous twin screw kneader 9 at a speed of 710.1 g/min.

Further, a heat medium temperature-controlled at 90°C was passed through a jacket of a barrel of the continuous twin screw kneading extruder 9.

According to the above-mentioned method, the components (A), (B), (C) and (E) were charged into the continuous twin screw kneader, and thickened in the continuous twin screw kneader, and a dough (clay-like substance) was continuously produced at a speed of 52.6 g/h (thickening process). The remaining time of the materials in the continuous twin screw kneader was about 2 minutes. The extruded BMC had a temperature of 82°C.

Then, this dough was cooled to 40°C (cooling process). The cooling required 30 minutes.

This cooled BMC was fed to an extruder (PCM 10 type, manufactured by Ikegai Tekkosho K.K.), and simultaneously, 1,1-bis(t-butyl peroxy)3,3,5-trimethylcyclohexane (manufactured by NOF Corp., trade name "Perhexa 3M", 10 hours half life temperature = 90°C) as a curing agent (D) was fed in amount of 0.6 parts per 100 parts of the dough, to obtain an acrylic BMC in the form of sheet (curing agent mixing process). The time of mixing the curing agent was 2 minutes.

As described above, production of an acrylic BMC required three processes, a thickening process, cooling process and curing agent mixing process, meaning a complicated production line. These three processes required 34 minutes in total.

Then this acrylic BMC was sampled by the same methods as in Example VII-1, and press-molded to obtain five plates of granite-like acrylic artificial marble having a thickness of 10 mm. Among the five resulted granite-like artificial marble, one had a part of curing failure.

[Comparative Example VII-2]

A mixture composed of 10.8 parts of methyl methacrylate and 8.2 parts of neopentyl glycol dimethacrylate, as an acrylic monomer (A), was charged into a tank 1A, and fed continuously into a hopper 8 appended to a continuous twin screw kneader 9 (S-2 type KRC kneader manufactured by Kurimoto Ltd., screw diameter = 50 mm, L/D = 13.7) by a snake pump 3A manufactured by Hyoshin Sobi K.K., at a speed of 166.5 g/min.

20 parts of the polymer powder (P-4) as an acrylic polymer (B), 52 parts of aluminum hydroxide as an inorganic filler (C), and 9 parts of a mixture of a white inorganic filler-containing resin particle and a black inorganic filler-containing resin particle (weight ratio, 1:1) produced in Production Example (5) as an inorganic filler-containing resin particle (E) were pre-mixed, and the mixture was charged into an SUS vessel 5B appended to a screw feeder 6B manufactured by Kuma Engineering, and fed continuously to the hopper 8 appended to the continuous twin screw kneader 9 at a speed of 710.1 g/min.

1,1-bis(t-butyl peroxy)3,3,5-trimethylcyclohexane (manufactured by NOF Corp., trade name "Perhexa 3M" , 10 hours half life temperature = 90°C) as a curing agent (D) was charged into a tank 1D, and fed continuously into the hopper 8 appended to the continuous twin screw kneader 9 by a snake pump 3D manufactured by Hyoshin Sobi K.K., at a speed of 10.5 g/min.

Further, a heat medium temperature-controlled at 90°C was passed through a jacket of a barrel of the continuous twin screw kneading extruder 9.

According to the above-mentioned method, the components (A) to (E) were charged into the continuous twin screw kneader, and kneading and thickening were conducted in one process in the continuous twin screw kneader. However, curing occurred in the continuous twin screw kneader during kneading, and an acrylic BMC could not be discharged continuously for a long period of time.

[Comparative Example VII-3]

A mixture composed of 7.5 parts of trimethylolpropane trimethacrylate (manufactured by Mitsubishi Rayon Co., Ltd., trade name "Acryester TMP") and 7.5 parts of styrene (manufactured by Mitsubishi Chemical Co., Ltd.), as an acrylic monomer (A), 23 parts of the polymer powder (P-4) as an acrylic polymer (B), 42 parts of aluminum hydroxide as an inorganic filler (C), 0.6 parts of dicumyl peroxide (manufactured by NOF Corp., trade name "Percumyl D" , 10 hours half life temperature = 116°C)) as a curing agent, and 20 parts of a mixture of a white inorganic filler-containing resin particle and a black inorganic filler-containing resin particle (weight ratio, 1:1) produced in Production Example (5) as an inorganic filler-containing resin particle (E) were charged into a batch-wise kneader (manufactured by Moriyama Seisakusho K.K., MS double arm type kneader, G30-10 type). A heat medium temperature-controlled at 60°C was passed through a jacket of the kneader, and kneaded for 30 minutes, to obtain an acrylic BMC. The resulted acrylic BMC had a temperature of 60°C, and thickened to a certain extent directly after kneaded and was in the form of dough, however, it had stickiness and handling property thereof was poor.

Then, acrylic artificial marble having a thickness of 10 mm was obtained by the same method as in Example VII-1 (molding temperature of an upper mold was changed to 145 °C, and molding temperature of a lower mold was changed to 130°C) using this acrylic BMC.

In the resulted artificial marble, an inorganic filler-containing resin particle which is a material of a grain pattern had been dissolved, no granite-like appearance was found, and appearance was extremely poor.

Table 4

| | Acrylic monomer (A) | | | | | Acrylic polymer (B) | | Inor-ganic filler (C) | Curing agent (D) | | Inorganic filler-containing resin particle (E) |
|---|---|---|---|---|---|---|---|---|---|---|---|
| | MMA | IBX | NPG | TMP | St | Kind | Amount | | Kind | Amount | |
| Ex.VII-1 | 6.5 | 6.5 | 10.4 | - | - | P-1 | 15.6 | 61 | Perhaxa 3M | 0.6 | - |
| Ex.VII-2 | 6.5 | 6.5 | 10.4 | - | - | P-2 | 15.6 | 61 | Kayaester AN | 0.6 | - |
| Ex.VII-3 | 7.0 | 4.5 | 13.0 | - | - | P-1 | 14.5 | 54 | KD-1 | 0.6 | 7 |
| Ex.VII-4 | 6.0 | 4.0 | 12.0 | - | - | P-3 | 12.0 | 46 | Perbutyl Z | 0.6 | 20 |
| Ex.VII-5 | 5.5 | 4.0 | 11.0 | - | - | P-1 P-4 | 9.0 4.5 | 46 | Trigonox 42 | 0.6 | 20 |
| Comp.Ex. VII-1 | 10.8 | - | 8.2 | - | - | P-4 | 20.0 | 52 | Perhaxa 3M | 0.6 | 9 |
| Comp.Ex. VII-2 | 10.8 | - | 8.2 | - | - | P-4 | 20.0 | 52 | Perhaxa 3M | 0.6 | 9 |
| Comp.Ex. VII-3 | - | - | - | 7.5 | 7.5 | P-4 | 23.0 | 42 | Percumyl D | 0.6 | 20 |

Abbreviations in Table 4 are shown below.
MMA:methyl methacrylate, IBX:isobornyl methacrylate,
NPG:neopentyl glycol dimethacrylate, TMP:trimethylolpropane trimethacrylate,
ST:styrene, Perhexa 3M:1,1-bis(t-butyl peroxy)3,3,5-trimethylcyclohexane,
Kayaester AN:t-amyl peroxy-3,5,5-trimethylhexanoate, KD-1:t-amyl peroxy benzoate,
Perbutyl Z:t-butyl peroxy benzoate,
Trigonox 42: t-butyl peroxy-3,5,5-trimethyl hexanoate,
Percumyl D: dicumyl peroxide

EP 1 197 523 A1

Table 5

| | 10 hours half life temperature of curing agent (D) | Kind of kneader | Process number | Heat medium tempe-rature | BMC tem-perature | Kneading time | Continuous operation stability |
|---|---|---|---|---|---|---|---|
| Ex.VII-1 | 90℃ | Continu-ous | 1 | 45℃ | 60℃ | 2 min. | ○ |
| Ex.VII-2 | 95℃ | Continu-ous | 1 | 55℃ | 51℃ | 1 min. | ○ |
| Ex.VII-3 | 100℃ | Continu-ous | 1 | 45℃ | 52℃ | 2 min. | ○ |
| Ex.VII-4 | 104℃ | Continu-ous | 1 | 60℃ | 55℃ | 40 sec. | ○ |
| Ex.VII-5 | 100℃ | Continu-ous | 1 | 45℃ | 62℃ | 40 sec. | ○ |
| Comp.Ex. VII-1 | 90℃ | Continu-ous | 2 | 90℃ | 82℃ | 2 min. | ○ |
| Comp.Ex. VII-2 | 90℃ | Continu-ous | 1 | 90℃ | – | – | × |
| Comp.Ex. VII-3 | 116℃ | Batch-wise | 1 | 60℃ | 60℃ | 30 min. | – |

Table 5 (cont.)

| BMC discharging amount (kg/h) | Production efficiency (kg/h·mm²) | Thickening property of BMC | Storage stability of BMC | Uniform curing property of BMC | Clearness of grain pattern of molded article |
|---|---|---|---|---|---|
| 105 | 0.042 | ○ | ◎ | ○ | - |
| 150 | 0.060 | ○ | ◎ | ○ | - |
| 105 | 0.042 | ○ | ◎ | ○ | ○ |
| 180 | 0.072 | ○ | ◎ | ○ | ○ |
| 180 | 0.072 | ○ | ◎ | ○ | ○ |
| 52.6 | 0.021 | ○ | ○ | × | △ |
| - | - | - | - | - | - |
| - | - | × | × | ○ | × |

[Example VIII-1]

Into a mixture composed of 6.5 parts of methyl methacrylate (manufactured by Mitsubishi Rayon Co., Ltd., trade name "Acryester M" ), 6.5 parts of isobornyl methacrylate (manufactured by Mitsubishi Rayon Co., Ltd., trade name "Acryester IBX" ), 10.4 parts of neopentyl glycol dimethacrylate (manufactured by Shin Nakamura Kagaku K.K., trade name "NK Ester NPG") and 0.01 part of 2,6-di-t-butyl-4-methylphenol (manufactured by Sumitomo Chemical Co., Ltd., trade name "Sumilizer BHT" ), as an acrylic monomer (A), was pre-mixed and dissolved 0.6 parts of 1,1-bis (t-butyl peroxy)3,3,5-trimethylcyclohexane (manufactured by NOF Corp., trade name "Perhexa 3M" , 10 hours half life temperature = 90°C) as a curing agent (D) and the pre-mixture was charged into a tank 1A, and fed continuously into a continuous twin screw kneader 9 (S-2 type KRC kneader manufactured by Kurimoto Ltd., screw diameter = 50 mm, L/D = 13.7) at a speed of 795 g/min. through a liquid feeding tube 4A connected to the continuous twin screw kneader 9, by a snake pump 3A manufactured by Hyoshin Sobi K.K.

The polymer powder (P-1) was charged as an acrylic polymer (B) into an SUS vessel 5B appended to a screw feeder 6B manufactured by Kuma Engineering K.K., and fed continuously to the hopper 8 appended to the continuous twin screw kneader 9, at a speed of 517 g/min.

Aluminum hydroxide (manufactured by Sumitomo Chemical Co., Ltd., trade name "CWL-325J" ) was charged as an inorganic filler (C) into an SUS vessel 5C appended to a screw feeder 6C manufactured by Kuma Engineering K.K., and fed continuously into the hopper 8 appended to the continuous twin screw kneader 9 at a speed of 2021 g/min.

By storing all of 1A, 5B and 5C in a constant temperature chamber at 30°C, the temperatures of the components (A) to (D) were constantly maintained at 30°C.

Further, a heat medium temperature-controlled at 45°C was passed through a jacket of a barrel of the continuous twin screw kneading extruder 9.

According to the above-mentioned method, the components (A) to (D) were charged simultaneously into the continuous twin screw kneader, and an acrylic BMC in the form of sheet was produced continuously from a die 10 attached to the lower part of the tip of the continuous twin screw kneading extruder 9, at a speed of 200 kg/h. The remaining time of the materials in the continuous twin screw kneader was about 30 seconds. The extruded BMC had a temperature of 63°C and it could be extruded without problem.

The acrylic BMC in the form of sheet was continuously produced under this condition. As a result, an acrylic BMC in the form of sheet was obtained stably, even when the operation was continued for 3 hours or more.

The resulted acrylic BMC in the form of sheet was a BMC manifesting excellent handling property without stickiness, even directly after discharged from the tip of the continuous twin screw kneading extruder, and had a viscosity of $10^4$ Pa · s.

This acrylic BMC was sealed with a laminate film (manufactured by Star Plastic Industry K.K., trade name "Eslap HB" ) having a three-layer structure of polyolefin/polyamide/polyolefin, having a thickness of 80 μm, and left under an atmosphere of 23°C. This acrylic BMC was not cured even three months after being left, and revealed extremely excellent storage stability.

Then, portions each having a weight of 700 g were randomly sampled at five positions from this acrylic BMC in the form of sheet. 700 g of this sampled acrylic BMC was filled in a plate mold of 200 mm square, and cured under heat and pressure for 10 minutes under conditions of an upper mold temperature of 130°C, a lower mold temperature of 115°C and a pressure of 10 MPa, to obtain five plates of acrylic artificial marble having a thickness of 10 mm. Any of the resulted five pieces of artificial marble had high surface gloss, contained no part of curing failure, and had extremely excellent appearance.

[Comparative Example VIII-1]

The same operation as in Example VIII-1 was conducted except that 1A, 5B and 5C were not stored in a constant temperature chamber, and an acrylic BMC was produced at an outside air temperature of 5°C. The produced acrylic BMC was under loose condition, meaning poor mixing of raw materials, and the sheet form could not be kept. On the molded article of artificial marble, parts containing a significant proportion of aluminum hydroxide and parts containing a significant proportion of the polymer were present non-uniformly, and remarked spots were observed.

[Comparative Example VIII-2]

The same operation as in Example VIII-1 was conducted except that (P-4) was used as an acrylic polymer (B). The produced acrylic BMC had a viscosity of 20 Pa · s, and could not be shaped into a sheet. When this acrylic BMC was press-molded under heat, the acrylic BMC was protruded from a mold, and a plate of acrylic artificial marble having desired dimension could not be produced. Further, undissolved portions of (P-4) remained in separate positions, namely, the plate had poor appearance.

[Example VIII-2]

The same operation as in Example VIII-1 was effected, to continuously produce an acrylic BMC in the form of sheet at a speed of 200 kg/h, excepting that 13.2 parts of methyl methacrylate, 4.1 parts of neopentyl glycol dimethacrylate and 0.5 parts of ethylene glycol dimethacrylate were used as an acrylic monomer (A) and into syrup prepared by dissolving 9.6 parts of (P-4) obtained in Production Example (4) in the acrylic monomers (A) (27.4 parts, in total) was dissolved 0.5 parts of t-amyl peroxy benzoate (manufactured by Kayaku Akuzo K.K., trade name "KD-1" ) as a curing agent (D) and 0.15 parts of zinc stearate as an internal releasing agent, and the feeding speed thereof was 929 g/min, excepting that the acrylic powder (P-1) was used as an acrylic polymer (B), and the feeding speed thereof was 225 g/min., excepting that aluminum hydroxide (manufactured by Sumitomo Chemical Co., Ltd., trade name "CWL-325J") was fed as an inorganic filler (C) at a speed of 1543 g/min., and excepting that the pre-mixture of a white inorganic filler-containing resin particle and a black inorganic filler-containing resin particle (ratio by weight: 1:1, average particle size: 300 μm) produced in Production Example (5) was used as an inorganic filler-containing resin particle (E), charged in an SUS vessel 5E, and fed by a screw feeder 6E at a speed of 636 g/min.

The remaining time of the materials in the continuous twin screw kneader was about 30 seconds. The extruded BMC had a temperature of 60°C and it could be extruded without problem. The produced BMC had a viscosity of $10^4$ Pa · s and a plate of artificial marble having excellent appearance was produced by press-molding this BMC.

[Comparative Example VIII-3]

The same operation was conducted as in Example VIII-2 except that 1A, 5B, 5C and 5E were not stored in a constant temperature chamber, and an acrylic BMC was produced at an outside air temperature of 5°C. The produced acrylic BMC was under loose condition, meaning poor mixing of raw materials, and the sheet form could not be kept. On the molded article of artificial marble, parts containing a significant proportion of aluminum hydroxide and parts containing a significant proportion of the polymer were present non-uniformly, and remarked spots were observed.

Table 6

| | Acrylic monomer (A) | | | | | Acrylic polymer (B) | | Inorganic filler (C) | Curing agent (D) | | Inorganic filler-containing resin particle (E) |
|---|---|---|---|---|---|---|---|---|---|---|---|
| | MMA | IBX | NPG | ED | St | Kind | Amount | | Kind | Amount | |
| Ex. VIII-1 | 6.5 | 6.5 | 10.4 | – | – | P-1 | 15.6 | 61 | Perhaxa 3M | 0.6 | – |
| Ex. VIII-2 | 6.5 | 6.5 | 10.4 | – | – | P-2 | 15.6 | 61 | Perhaxa 3M | 0.6 | – |
| Ex. VIII-3 | 13.2 | – | 4.1 | 0.5 | – | P-1 P-4 | 6.8 9.6 | 46.6 | KD-1 | 0.5 | 19.2 |

Abbreviations in Table 6 are shown below.
MMA:methyl methacrylate, IBX:isobornyl methacrylate,
NPG:neopentyl glycol dimethacrylate, EDMA:ethylene glycol dimethacrylate,
Perhexa 3M:1,1-bis(t-butyl peroxy)3,3,5-trimethylcyclohexane,
KD-1:t-amyl peroxy benzoate

[Example VIII-3]

A batch-wise twin screw kneader shown in Fig. 4 (manufactured by Moriyama Seisakusho K.K., MS double arm type kneader, G30-10 type) was used. The same raw materials as in Example VIII-1 were used, in a total amount of 15 kg. The raw materials used were all controlled at 30°C. A heat medium of 40°C was passed through a jacket of the kneader. An inorganic filler (B), a mixture of an acrylic monomer (A) and a curing agent (B), and an acrylic polymer (B) were charged in this order while rotating two screws equipped with blades. The mixing was continued for 4 minutes before stop of ration of the two screws, and an acrylic BMC was removed out. The produced BMC had a temperature of 45°C, and a viscosity of $10^4$ Pa · s, and by press-molding this BMC, a plate of artificial marble having excellent appearance was produced.

[Example VIII-4]

The same operation as in Example VIII-3 was effected excepting that raw materials left under an outside air temperature of 5°C were used to produced an acrylic BMC. At a moment of 10 minutes mixing, the content of the kneader was observed to find an acrylic BMC under loose condition, and poor mixing and poor thickening of the raw materials were confirmed. In this method, an acrylic BMC could not be produced.

[Example IX-1]

A mixture composed of 6.5 parts of methyl methacrylate (manufactured by Mitsubishi Rayon Co., Ltd., trade name "Acryester M" ), 6.5 parts of isobornyl methacrylate (manufactured by Mitsubishi Rayon Co., Ltd., trade name "Acryester IBX" ), 10.4 parts of neopentyl glycol dimethacrylate (manufactured by Shin Nakamura Kagaku K.K., trade name "NK Ester NPG" ), 0.01 part of 2,6-di-t-butyl-4-methylphenol (manufactured by Sumitomo Chemical Co., Ltd., trade name "Sumilizer BHT" ) and 5 parts of a pigment (COLORTEX GREEN#402, manufactured by Sanyo Shikiso K.K.), as an acrylic monomer (A), was charged into a tank, and fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed was 30.4 kg/h.

The polymer powder (P-1) was charged as an acrylic polymer (B) into an SUS vessel appended to a screw feeder manufactured by Kuma Engineering K.K., and fed continuously to a hopper appended to the continuous twin screw kneader. The feeding speed was 16.4 kg/h.

Aluminum hydroxide (manufactured by Sumitomo Chemical Co., Ltd., trade name "CWL-325J" ) was charged as an inorganic filler (C) into an SUS vessel appended to a screw feeder manufactured by Kuma Engineering K.K., and fed continuously into a hopper appended to the continuous twin screw kneader. The feeding speed was 64.1 kg/h.

1,1-bis(t-butyl peroxy)3,3,5-trimethylcyclohexane (manufactured by NOF Corp., trade name "Perhexa 3M" , 10 hours half life temperature = 90°C) as a curing agent was charged into a tank, and fed continuously into a hopper appended to the continuous twin screw kneader by a snake pump manufactured by Hyoshin Sobi K.K. The feeding speed was 0.63 kg/h.

Further, a heat medium temperature-controlled at 40°C was passed through a jacket of a barrel of the continuous twin screw kneader.

The kneaded substance discharged from the continuous twin screw kneader had a temperature of 45°C. The remaining time of the materials in the continuous twin screw kneader was about 2 minutes.

The kneaded substance discharged from a discharging port of the continuous twin screw kneader was introduced into a hopper appended to a single screw extruder for shaping (manufactured by Chubu Kagakukikai K.K., screw diameter φ 65 mm, L/D=6), and operation was effected while controlling the extrusion speed of the single screw extruder for shaping so that the kneaded substance was not protruded into the hopper part, to obtain an acrylic BMC having a continuous rectangular sectional form of 19 mm $\times$ 75 mm. The resulted acrylic BMC had a temperature of 50°C. A dice having a discharging sectional form of 17 mm $\times$ 75 mm had been mounted previously to the discharging port of the single screw extruder for shaping. Further, a heat medium temperature-controlled at 45°C was passed through jackets of the single screw extruder for shaping and dice.

According to the above-mentioned method, the components (A) to (D) were charged simultaneously into the continuous twin screw kneader, and kneading was conducted in the continuous twin screw kneader, subsequently, shaping was effected by the single screw extruder, to produce continuously an acrylic BMC for about 4 hours at a speed of 111.5 kg/h.

Then, portions each having a weight of 700 g were randomly sampled at five positions from this acrylic BMC in the form of sheet. 700 g of this sampled acrylic BMC was filled in a plate mold of 200 mm square, and cured under heat and pressure for 10 minutes under conditions of an upper mold temperature of 130°C, a lower mold temperature of 115°C and a pressure of 10 MPa, to obtain five plates of acrylic artificial marble having a thickness of 10 mm.

In each of these five plates, the maximum difference among chrominances ΔE* of five measuring points, four corner points and the center point (hereinafter, described as ΔE*MAX) was measured using a chrominance meter (HANDY CORORIMETER NR-3000 manufactured by NIPPON DEN-SHOKU). The average value of L* of these plates was 32, and when ΔE*MAX was compared between the five plates, the maximum value of ΔE*MAX was 0.45. Chrominance could not be recognized visually on these plates. (details are described in Table IX-1)

Then, the apparatus was once stopped, the dice having a rectangular sectional form attached to the single screw extruder for shaping was removed, and instead, a dice having circular sectional form of φ40 was attached, then, the first process was conducted under the same operation conditions as described above, and the second process was operated in the same manner as described above for the second process excepting that a heat medium temperature-controlled at 62°C was passed through jackets of the single screw extruder for shaping and the dice. An acrylic BMC having a continuous circular sectional form of φ 42 was obtained by operating under these conditions over about 4 hours at a speed of 111.5 kg/h. The resulted acrylic BMC had a temperature of 65°C.

Next, five plates of acrylic artificial marble were obtained in the same manner, from this acrylic BMC.

On each of these five plates, color measurement was effected in the same manner, as a result, the average value of L* was 32, and the maximum value of ΔE*MAX was 0.48. Chrominance could not be recognized visually on these plates. (details are described in Table IX-2)

As described above, by carrying out continuously the first process of kneading constituent components of an acrylic BMC and the second process of shaping the kneaded substance, and by selecting suitable temperature conditions in the first process and second process respectively, an acrylic BMC having excellent kneading property and shaping property could be obtained even if dices of different forms were used.

[Comparative Example IX-1]

The acrylic monomer (A) used in Example IX-1 was fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed was 30.4 kg/h.

The acrylic polymer (B) used in Example IX-1 was charged into an SUS vessel appended to a screw feeder manufactured by Kuma Engineering K.K., and fed continuously to a hopper appended to the continuous twin screw kneader. The feeding speed was 16 kg/h.

The inorganic filler (C) used in Example IX-1 was charged into an SUS vessel appended to a screw feeder manufactured by Kuma Engineering K.K., and fed continuously to a hopper appended to the continuous twin. screw kneader. The feeding speed was 64.1 kg/h.

Further, a heat medium temperature-controlled at 40°C was passed through a jacket of a barrel of the continuous twin screw kneader.

The kneaded substance discharged from the continuous twin screw kneader had a temperature of 45°C: The remaining time of the materials in the continuous twin screw kneader was about 2 minutes.

The kneaded substance discharged from a discharging port of the continuous twin screw kneader was introduced into a hopper appended to a single screw extruder for shaping (manufactured by Chubu Kagakukikai K.K., screw diameter φ 65 mm, L/D=6), and simultaneously, the curing agent (D) used in Example IX-1 was fed continuously to a hopper appended to the single screw extruder for shaping using a snake pump manufactured by Hyoshin Sobi K.K. at a feeding speed of 0.63 kg/h, and operation was effected while controlling the extrusion speed of the single screw extruder for shaping so that the kneaded substance was not protruded into the hopper part, to obtain an acrylic BMC having a continuous rectangular sectional form of 19 mm × 75 mm. The resulted acrylic BMC had a temperature of 50°C. A dice having a discharging sectional form of 17 mm × 75 mm had been mounted previously to the discharging port of the single screw extruder for shaping. Further, a heat medium temperature-controlled at 45°C was passed through jackets of the single screw extruder for shaping and dice.

According to the above-mentioned method, the components (A) to (C) were charged simultaneously into the continuous twin screw kneader, and kneading was conducted in the continuous twin screw kneader, subsequently, shaping was effected by the single screw extruder, to produce continuously an acrylic BMC for about 4 hours at a speed of 111.5 kg/h.

Then, five plates of acrylic artificial marble were obtained in the same manner as in Example IX-1 from this acrylic BMC.

On each of these five plates, appearance was observed. As a result, curing failure was found on a part of lower mold contact side in one plate among five plates.

[Comparative Example IX-2]

The acrylic monomer (A) used in Example IX-1 was fed continuously into a hopper appended to a continuous twin screw kneader (S-2 type KRC kneader manufactured by Kurimoto Ltd., screw diameter = 50 mm, L/D = 13.7) by a snake pump manufactured by Hyoshin Sobi K.K. The feeding speed was 30.4 kg/h.

The acrylic polymer (B) used in Example IX-1 was charged into an SUS vessel appended to a screw feeder manufactured by Kuma Engineering K.K., and fed continuously to a hopper appended to the continuous twin screw kneader. The feeding speed was 16 kg/h.

The inorganic filler (C) used in Example IX-1 was charged into an SUS vessel appended to a screw feeder manufactured by Kuma Engineering K.K., and fed continuously to a hopper appended to the continuous twin screw kneader. The feeding speed was 64.1 kg/h.

The curing agent (D) used in Example IX-1 was fed continuously into a hopper appended to the continuous twin screw kneader by a snake pump manufactured by Hyoshin Sobi K.K. The feeding speed was 0.63 kg/h.

According to the above-mentioned method, the components (A) to (D) were charged simultaneously into the continuous twin screw kneader, and kneading and shaping were conducted in one process in the continuous twin screw kneader, and an acrylic BMC was continuously produced for about 4 hours at a speed of 111.5 kg/h by the continuous twin screw kneader, to obtain an acrylic BMC having a continuous rectangular sectional form of 19 mm × 75 mm. The resulted acrylic BMC had a temperature of 48°C. The remaining time of the materials in the continuous twin screw kneader was about 2 minutes. A dice having a discharging sectional form of 17 mm × 75 mm had been mounted previously to the discharging port of the continuous twin screw kneader. Further, a heat medium temperature-controlled at 40°C was passed through jackets of the continuous twin screw kneader and dice.

Next, five plates of acrylic artificial marble were obtained in the same manner as in Example IX-1, from this acrylic BMC.

On each of these five plates, color measurement was effected in the same manner as in Example IX-1, as a result, the average value of L* was 32, and the maximum value of ΔE*MAX was 0.47. Chrominance could not be recognized visually on these plates. (details are described in Table IX-3)

Then, the apparatus was once stopped, the dice having a rectangular sectional form attached to the continuous twin screw kneader was removed, and instead, a dice having circular sectional form of φ 40 was attached, then, operation was conducted under the same operation conditions as described above excepting that a heat medium temperature-controlled at 40°C was passed through jackets of the continuous twin screw kneader and the dice. As a result, an acrylic BMC did not form a block, and an acrylic BMC could not be shaped continuously.

Next, the apparatus was once stopped, and operation was conducted under the same operation conditions as described above excepting that a heat medium temperature-controlled at 62°C was passed through jackets of the continuous twin screw kneader and the dice, to obtain an acrylic BMC having continuous circular sectional form of φ 42. The resulted acrylic BMC had a temperature of 70°C.

Next, five plates of acrylic artificial marble were obtained in the same manner as in Example IX-1, from this acrylic BMC.

On each of these five plates, color measurement was effected in the same manner as in Example IX-1, as a result, the average value of L* was 32, and the maximum value of ΔE*MAX was 3.5. Chrominance was recognized visually on these plates. (details are described in Table IX-4)

As described above, in the case of kneading and shaping effected in one process by the same apparatus, when a dice for rectangular shaping was used, an acrylic BMC having excellent kneading property and shaping property could be obtained, while when a dice for circular shaping was used, an acrylic BMC satisfying both kneading property and shaping property simultaneously could not be obtained.

Table IX-1

| Sample NO. | 1 | 2 | 3 | 4 | 5 |
|---|---|---|---|---|---|
| ΔE*MAX | 0.44 | 0.45 | 0.45 | 0.42 | 0.43 |

Table IX-2

| Sample NO. | 1 | 2 | 3 | 4 | 5 |
|---|---|---|---|---|---|
| ΔE*MAX | 0.48 | 0.45 | 0.46 | 0.42 | 0.43 |

Table IX-3

| Sample NO. | 1 | 2 | 3 | 4 | 5 |
|---|---|---|---|---|---|
| ΔE*MAX | 0.45 | 0.47 | 0.43 | 0.44 | 0.45 |

Table IX-4

| Sample NO. | 1 | 2 | 3 | 4 | 5 |
|---|---|---|---|---|---|
| ΔE*MAX | 3.50 | 0.75 | 0.62 | 0.64 | 0.69 |

[Example X-1]

A mixture composed of 39.5 parts of methyl methacrylate (manufactured by Mitsubishi Rayon Co., Ltd., trade name "Acryester M" ), 6 parts of neopentyl glycol dimethacrylate (manufactured by Shin Nakamura Kagaku K.K., trade name "NK Ester NPG" ) and 0.01 part of 2,6-di-t-butyl-4-methylphenol (manufactured by Sumitomo Chemical Co., Ltd., trade name "Sumilizer BHT" ), as an acrylic monomer (A), was charged into a tank 1A, and fed continuously into a hopper 8 appended to a continuous twin screw kneader 9 (S-2 type KRC kneader manufactured by Kurimoto Ltd., screw diameter = 50 mm, L/D = 13.7) at a speed of 455 g/min. by a snake pump 3A manufactured by Hyoshin Sobi K.K.

The polymer powder (P-2) was charged as an acrylic polymer (B) into an SUS vessel 5B appended to a screw feeder 6B manufactured by Kuma Engineering K.K., and fed continuously to a hopper 8 appended to the continuous twin screw kneader 9, at a speed of 533 g/min.

1,1-bis(t-butyl peroxy)3,3,5-trimethylcyclohexane (manufactured by NOF Corp., trade name "Perhexa 3M" , 10 hours half life temperature = 90°C) as a curing agent (D) was charged into a tank 1C, and fed continuously into a hopper 8 appended to the continuous twin screw kneader 9 at a speed of 12 g/min. by a snake pump 3C manufactured by Hyoshin Sobi K.K. Further, a heat medium temperature-controlled at 35°C was passed through a jacket of a barrel of the continuous twin screw kneader 9.

According to the above-mentioned method, the components (A) to (C) were charged simultaneously into the continuous twin screw kneader, and mixing and dissolution were conducted in one process in the continuous twin screw kneader, and a semi-solid acrylic syrup dough of cylindrical form was continuously produced at a speed of 60 kg/h from a dice attached to the lower part of the tip of the continuous twin screw kneader 9. The remaining time of the materials in the continuous twin screw kneader was about 2 minutes. The extruded semi-solid acrylic syrup dough had a temperature of 42°C and it could be extruded without problem.

[Comparative Example X-1]

A mixture composed of 16.2 parts of methyl methacrylate and 12.2 parts of neopentyl glycol dimethacrylate, as an acrylic monomer (A), was charged into a tank 1A, and fed continuously into a hopper 8 appended to a continuous twin screw kneader 9 (S-2 type KRC kneader manufactured by Kurimoto Ltd., screw diameter = 50 mm, L/D = ) at a speed of 241.4 g/min. by a snake pump 3A manufactured by Hyoshin Sobi K.K.

The polymer powder (P-4) was charged as an acrylic polymer (B) into an SUS vessel 5B appended to a screw feeder 6B manufactured by Kuma Engineering K.K., and fed continuously to a hopper 8 appended to the continuous twin screw kneader 9, at a speed of 579.7 g/min.

1,1-bis(t-butyl peroxy)3,3,5-trimethylcyclohexane (manufactured by NOF Corp., trade name "Perhexa 3M" , 10 hours half life temperature = 90°C) as a curing agent (D) was charged into a tank 1C, and fed continuously into a hopper 8 appended to the continuous twin screw kneader 9 at a speed of 28.9 g/min. by a snake pump 3C manufactured by Hyoshin Sobi K.K. Further, a heat medium temperature-controlled at 95°C was passed through a jacket of a barrel of the continuous twin screw kneader 9.

According to the above-mentioned method, the components (A) to (C) were charged into the continuous twin screw kneader, and mixing and dissolution were conducted in one process in the continuous twin screw kneader. However, curing occurred in the continuous twin screw kneader, and acrylic syrup could not be obtained.

Table 7

| | Acrylic monomer (A) | | Acrylic polymer (B) | | Curing agent (D) | | 10 hours half life temperature of curing agent (D) | heat medium temperature | syrup temperature |
|---|---|---|---|---|---|---|---|---|---|
| | MMA | NPG | Kind | Amount | Kind | Amount | | | |
| Ex. X-1 | 39.5 | 6.0 | P-2 | 53.3 | Perhaxa 3M | 1.2 | 90°C | 35°C | 42°C |
| Comp.Ex. X-1 | 16.2 | 12.2 | P-4 | 68.2 | Perhaxa 3M | 3.4 | 90°C | 95°C | — |

Abbreviations in Table 7 are shown below.

MMA:methyl methacrylate, NPG:neopentyl glycol dimethacrylate, Perhexa 3M:1,1-bis(t-butyl peroxy)3,3,5-trimethylcyclohexane

As apparent also from the examples above, by conducting kneading under specific temperature condition

**EP 1 197 523 A1**

depending on the decomposition temperature of a curing agent used, in producing an acrylic BMC, it becomes possible to conduct kneading of the curing agent and thickening of BMC in one process in a continuous twin screw kneader, and production line for an acrylic BMC can be simplified. Further, by effecting kneading under this specific temperature condition, production efficiency of a continuous twin screw kneader can be enhanced, and an acrylic BMC can be produced at extremely high production speed. Further, an acrylic BMC obtained by the production method of the present invention has excellent storage stability and excellent in curing property. Furthermore, acrylic artificial marble produced by using this manifests clear grain pattern, has excellent appearance and is very useful industrially.

**Claims**

1. A method of producing an acrylic BMC comprising an acrylic monomer (A), an acrylic polymer (B), an inorganic filler (C) and a curing agent (D), wherein
kneading and thickening are conducted in one process by kneading and simultaneously thickening the components (A) to (D) in a continuous kneader under temperature condition in the range from 30°C to [10 hours half life temperature of the curing agent (D) - 10]°C.

2. A method of producing acrylic syrup comprising an acrylic monomer (A), an acrylic polymer (B), and a curing agent (D), wherein
mixing of the component (D) and dissolution of the component (B) are conducted in one process by mixing the components (A), (B) and (D) in a continuous kneader under temperature condition in the range from 30°C to [10 hours half life temperature of the curing agent (D) - 10]°C and simultaneously dissolving the component (B).

3. A method of producing an acrylic BMC containing an acrylic monomer (A), an acrylic polymer (B) and an inorganic filler (C), wherein the method comprises a first process of kneading the components (A) to (C) under temperature conditions of 60°C or lower, and a second process of continuously shaping the kneaded substance.

4. The method of producing an acrylic BMC according to Claim 3 wherein a twin screw kneader is used in the first process.

5. The method of producing an acrylic BMC according to Claim 4 wherein the twin screw kneader is a continuous twin screw kneader.

6. The method of producing an acrylic BMC according to Claim 3 wherein a continuous single screw kneader is used in the second process.

7. The method of producing an acrylic BMC according to Claim 3 wherein the first process and the second process are carried out continuously.

8. A method of producing an acrylic BMC containing an acrylic monomer (A), an acrylic polymer (B) and an inorganic filler (C), wherein at least one of the components (A) to (C) is temperature-controlled before fed to a kneader.

9. The method of producing an acrylic BMC according to Claim 8 wherein the kneader is a batch-wise kneader and the kneading time is 5 minutes or less.

10. The method of producing an acrylic BMC according to Claim 8 wherein the kneader is a continuous kneader and the kneading time is 1 minute or less.

11. The method of producing an acrylic BMC according to Claim 9 or 10 wherein the kneader is a twin screw kneader.

12. A method of producing an acrylic BMC containing an acrylic monomer (A), an acrylic polymer (B) and an inorganic filler (C), wherein, in kneading of the components (A) to (C) in a continuous kneader, powder components of the components (A) to (C) are fed into the continuous kneader in a proportion in the range of ±7 wt% based on the given feeding amount in 5 seconds;

13. The method of producing an acrylic BMC according to Claim 12 wherein the powder components are fed to a continuous kneader by a continuous feeder.

**14.** The method of producing an acrylic BMC according to Claim 13 wherein the continuous feeder is a screw type feeder.

**15.** The method of producing an acrylic BMC according to Claim 14 wherein a net substance is amounted on the tip of a feeding piping appended to the screw type feeder.

**16.** The method of producing an acrylic BMC according to Claim 14 or 15 wherein the powder components fed by the screw type feeder are fed to a continuous kneader after passing through a feeding process by a vibration type feeder.

**17.** The method of producing an acrylic BMC according to Claim 13 wherein the continuous feeder is a vibration type feeder.

**18.** The method of producing an acrylic BMC according to Claim 13 wherein the continuous feeder is a belt type feeder.

**19.** The method of producing an acrylic BMC according to Claim 17 wherein the powder components fed by the belt type feeder are fed to a continuous kneader after passing through a feeding process by a vibration type feeder.

**20.** The method of producing an acrylic BMC according to Claim 13 wherein the continuous feeder is a circle type feeder.

**21.** A method of producing an acrylic BMC containing an acrylic monomer (A), an acrylic polymer (B) and an inorganic filler (C), wherein the components (A) to (C) are kneaded in a continuous kneader, and the continuous kneader is operated under such conditions that the pressure at the tip of the continuous kneader is from 300 to 1500 kPa.

**22.** A method of producing an acrylic BMC containing an acrylic monomer (A), an acrylic polymer (B) and an inorganic filler (C), wherein the components (A) to (C) are kneaded in a continuous kneader under such temperature and time conditions that a kneading torque of $1 \, N \cdot m$ or more is detected by a torque rheometer when the components (A) to (C) are kneaded by the torque rheometer.

**23.** A method of producing an acrylic BMC containing an acrylic monomer (A), an acrylic polymer (B) and an inorganic filler (B), wherein the components (A) to (C) are kneaded in a continuous kneader under such conditions that the consumption energy necessary for kneading the components (A) to (C) is $1 \, MJ/m^3$ or more per unit volume of the acrylic BMC.

**24.** A method of producing an acrylic BMC containing an acrylic monomer (A), an acrylic polymer (B) and an inorganic filler (C), wherein the components (A) to (C) are kneaded in a continuous kneader under such conditions that the production efficiency of the continuous kneader is $0.01 \, kg/h \cdot mm^2$ or more.

**25.** A method of producing an acrylic BMC containing an acrylic monomer (A), an acrylic polymer (B) and an inorganic filler (C), wherein the components (A) to (C) are kneaded in a continuous kneader under such conditions that the specific rotation speed of the continuous kneader is in the range from 0.01 to 1.5 $rpm \cdot h/kg$.

**26.** The method of producing an acrylic BMC according to any of Claims 1, 12 and 21 to 25, wherein the continuous kneader is a continuous twin screw kneader.

**27.** The method of producing an acrylic BMC according to any of Claims 1, 12 and 21 to 25, wherein the production speed of the acrylic BMC is 30 kg/h or more.

**28.** The method of producing an acrylic BMC according to any of Claims 1, 3, 8, 12 and 21 to 25, wherein an inorganic filler-containing resin particle (E) is used together with the components (A) to (C) or the components (A) to (D).

**29.** The method of producing an acrylic BMC according to any of Claims 1, 3, 8, 12 and 21 to 25, wherein the acrylic polymer (B) is a polymer powder.

**30.** The method of producing an acrylic BMC according to Claim 29 wherein the specific surface area of the polymer powder is $0.1 \, m^2/g$ or more.

31. The method of producing an acrylic BMC according to Claim 29 wherein the polymer powder is a secondary agglomerate formed by aggregation of primary particles.

32. A method of producing an acrylic molded article, wherein an acrylic BMC produced by the method of any of Claims 1, 3, 8, 12 and 21 to 25 or acrylic syrup produced by the method of Claim 2 is cured under heat and pressure.

33. An acrylic molded article obtained by curing under heat and pressure an acrylic BMC obtained by a continuous production method, wherein the maximum value ($\Delta$ E*MAX) of the chrominance ($\Delta$E*) between color measuring points obtained from color measured values (L*, a*, b*) measured at any three ore more positions of the molded article is not more than 3.

FIG. 1

FIG. 2

FIG. 3

Kneader
Side

↑

↓

Discharging
Port Side

21

22

FIG. 4

24

23

25

| INTERNATIONAL SEARCH REPORT | International application No. |
|---|---|
| | PCT/JP00/01274 |

| A. CLASSIFICATION OF SUBJECT MATTER |
|---|
| Int.Cl$^7$  C08L33/12, C08F20/20, B29C43/02, B29B11/16, C04B26/06//B29K105:06, B29K33:00 |
| According to International Patent Classification (IPC) or to both national classification and IPC |

| B. FIELDS SEARCHED |
|---|
| Minimum documentation searched (classification system followed by classification symbols) |
| Int.Cl$^7$  C08L33/00-33/26, B29C43/00-43/58, C04B26/00-06 |
| Documentation searched other than minimum documentation to the extent that such documents are included in the fields searched |
| Electronic data base consulted during the international search (name of data base and, where practicable, search terms used) |
| WPI/L(DIALOG) |

| C. DOCUMENTS CONSIDERED TO BE RELEVANT |
|---|

| Category* | Citation of document, with indication, where appropriate, of the relevant passages | Relevant to claim No. |
|---|---|---|
| X | JP, 61-171713, A (Kyowa Gas Chemical Ind. Co., Ltd.), | 1 |
| A | 02 August, 1986 (02.08.86), Claims  (Family: none) | 2-33 |
| PA | JP, 11- 71416, A (Mitsubishi Rayon Co., Ltd.), 16 March, 1999 (16.03.99), Claims & WO, 98-46679, A1  & EP, 976786, A1 | 1-33 |
| A | JP, 10-218915, A (KURARAY CO., LTD.), 18 August, 1998 (18.08.98), Claims; Par. No. 22  (Family: none) | 1-33 |
| A | JP, 10- 67906, A (Mitsubishi Rayon Co., Ltd.), 10 March, 1998 (10.03.98), Claims; Par. Nos. 119 to 123 & EP, 894828, A1 | 1-33 |
| A | JP, 10-218905, A (KURARAY CO., LTD.), 18 August, 1998 (18.08.98), Claims; Par. Nos. 20 to 23  (Family: none) | 1-33 |
| A | JP, 63- 45160, A (Nippon Shokubai Kagaku Kogyo Co., Ltd.), 26 February, 1988 (26.02.88), Claims  (Family: none) | 1-33 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 April, 2000 (18.04.00) | 25.04.00 |

| Name and mailing address of the ISA/ | Authorized officer |
|---|---|
| Japanese Patent Office | |
| Facsimile No. | Telephone No. |

Form PCT/ISA/210 (second sheet) (July 1992)

**EP 1 197 523 A1**

## INTERNATIONAL SEARCH REPORT

| International application No. |
|---|
| PCT/JP00/01274 |

C (Continuation). DOCUMENTS CONSIDERED TO BE RELEVANT

| Category* | Citation of document, with indication, where appropriate, of the relevant passages | Relevant to claim No. |
|---|---|---|
| A | JP, 10-158332, A (KURARAY CO., LTD.), 16 June, 1998 (16.06.98), Claims; Par. Nos. 20 to 23 (Family: none) | 1-33 |
| A | JP, 10-292015, A (KURARAY CO., LTD.), 04 November, 1998 (04.11.98), Claims; Par. Nos. 24 to 26 (Family: none) | 1-33 |

Form PCT/ISA/210 (continuation of second sheet) (July 1992)

58